# FASCICULE DE BREVET EUROPEEN

(11) **EP 4 537 435 B1**
(45) Date de publication et mention de la délivrance du brevet: **08.04.2026**
(21) Numéro de dépôt: 23732468.6
(22) Date de dépôt: 09.06.2023
(51) Int. Cl.: H02B 11/173, H02B 1/36

(54) **ARMOIRE ÉLECTRIQUE DE RACCORDEMENT**
ELEKTRISCHER VERTEILERSCHRANK
ELECTRICAL CONNECTION CABINET

(30) Priorité: 10.06.2022 FR 2205609
(43) Date de publication de la demande: 16.04.2025
(73) Titulaire: SCHNEIDER ELECTRIC INDUSTRIES SAS, 92500 Rueil-Malmaison (FR)
(72) Inventeur: COMTOIS, Patrick, 38330 SAINT-ISMIER (FR); PERROCHEAU, Régis, 38190 LAVAL (FR); GUINDA, Santos, 27930 GUICHAINVILLE (FR)
(74) Mandataire: Lavoix
(86) Numéro de dépôt international: PCT/EP2023/065484
(87) Numéro de publication internationale: WO 2023/237738

(56) Documents cités:
- EP-A1- 2 557 643
- CA-A1- 3 124 942
- CN-Y- 201 113 281
- US-A1- 2015 103 472

## Description

La présente invention concerne une armoire électrique de raccordement.

Dans le domaine des armoires électriques industrielles, il est connu d'installer dans une armoire électrique de raccordement une ou plusieurs unités de contrôle-commande. Ces unités de contrôle-commande permettent chacune de raccorder l'armoire électrique à un équipement électrique et de commander cet équipement électrique, notamment à l'aide d'un contacteur. Il est également connu de protéger chaque unité de contrôle-commande à l'aide d'un dispositif de protection magnétique, comme par exemple un disjoncteur magnétique, chaque dispositif de protection magnétique permettant d'alimenter en électricité une unité de contrôle-commande et de protéger électriquement cette unité de contrôle-commande et l'équipement électrique qui y est raccordé. Ces dispositifs de protection magnétiques sont généralement directement intégrés dans les unités de contrôle-commande. De tels dispositifs de protection sont peu onéreux, de sorte que la présence d'un dispositif de protection magnétique par unité de contrôle-commande ne représente pas un surcoût important dans la fabrication de l'armoire électrique. Cependant, de tels dispositif de protection magnétiques sont peu performants, et leur temps de coupure est relativement long, ce qui peut entraîner des dégradations des unités de contrôle-commande lors de leur déclenchement, tel que par exemple la soudure du contacteur.

Il est également connu d'utiliser, dans des armoires électriques industrielles, des dispositifs de protection communs à plusieurs unités de contrôle-commande, qui ne sont pas intégrés aux unités de contrôle-commande mais disposés à l'extérieur des unités de contrôle-commande. En général, un dispositif de protection est utilisé pour protéger simultanément plusieurs unités de contrôle-commande lorsqu'il présente des performances supérieures à un dispositif de protection magnétique, et donc un encombrement et un coût de fabrication plus importants qu'un dispositif de protection magnétique. Un tel dispositif de protection est par exemple un dispositif de protection de type hybride, qui combine l'utilisation d'un semi-conducteur et d'un dispositif de coupure électromécanique. Utiliser le dispositif de protection en commun pour plusieurs unités de contrôle-commande permet donc à la fois de s'accommoder de l'encombrement plus important de ce type de dispositif de protection et de réduire le coût de protection par unité de contrôle-commande.

US-A1-2015/0103472 et EP-A1-2557643 décrivent des armoires électriques de l'art antérieur, et CA-A1-3124942 décrit un dispositif de protection de l'art antérieur.

Il n'existe pas, dans les armoires électriques industrielles connues, d'architecture permettant de disposer, dans une même armoire électrique, à la fois des unités de contrôle-commande embarquant des dispositifs de protection magnétiques et des unités de contrôle-commande protégées par des dispositifs de protection communs à plusieurs unités de contrôle-commande.

C'est à ce problème qu'entend plus particulièrement remédier l'invention en proposant une armoire électrique de raccordement pouvant accueillir diverses unités de contrôle-commande protégées soit par des dispositifs de protection de type magnétique, soit par des dispositifs de protection communs à plusieurs unités de contrôle-commande.

À cet effet, l'invention concerne une armoire électrique de raccordement, l'armoire électrique étant configurée pour alimenter et contrôler au moins deux charges électriques. Selon l'invention, l'armoire électrique comprend plusieurs unités de contrôle-commande, choisies parmi :
- des unités électromécaniques, chaque unité électromécanique étant configurée pour alimenter et contrôler une charge électrique et comprenant un dispositif électronique d'analyse, un interrupteur commandé configuré pour permettre ou interrompre l'alimentation de la charge électrique, et un dispositif de protection de type magnétique configuré pour protéger l'unité électromécanique et la charge électrique contre des défauts électriques,
- des unités électroniques, chaque unité électronique étant configurée pour alimenter et contrôler une charge électrique, comprenant un dispositif électronique d'analyse et un interrupteur commandé configuré pour permettre ou interrompre l'alimentation de la charge électrique et étant dépourvue de dispositif de protection de type magnétique.

En outre, l'armoire électrique comprend au moins deux zones fonctionnelles, parmi lesquelles :
- une première zone fonctionnelle accueille au moins une unité électromécanique, et
- une deuxième zone fonctionnelle accueille au moins deux unités électroniques et un dispositif de protection commun configuré pour protéger toutes les unités électroniques de la deuxième zone fonctionnelle et les charges électriques qui y sont raccordées contre des défauts électriques, le dispositif de protection commun étant distinct des unités électroniques.

De plus, la première zone fonctionnelle est en outre adaptée pour recevoir au moins deux unités électroniques et un dispositif de protection commun, et la deuxième zone fonctionnelle est en outre adaptée pour recevoir au moins une unité électromécanique.

Grâce à l'invention, il est possible d'installer, dans une même zone fonctionnelle de l'armoire électrique, des unités électromécaniques protégées par des dispositifs de protection de type magnétique, ou bien des unités électroniques protégées par des dispositifs de protection communs à ces unités électroniques. L'armoire électrique est ainsi modulaire, et les unités de contrôle-commande sont choisies parmi les unités électromécaniques et les unités électroniques, en fonction de la nature des charges électriques à alimenter et contrôler.

Selon des aspects avantageux, mais non obligatoire de l'invention, le module fonctionnel incorpore une ou plusieurs des caractéristiques suivantes, prises isolément ou selon toutes combinaisons techniquement admissibles :
- Une largeur de chaque unité électromécanique est strictement supérieure à une largeur de chaque unité électronique, les largeurs étant mesurées entre deux parois latérales des unités de contrôle-commande, et dans laquelle, dans la deuxième zone fonctionnelle, le dispositif de protection commun s'étend sur toute la hauteur de la deuxième zone fonctionnelle et est disposé sur un côté des unités électroniques, selon un axe longitudinal de l'armoire électrique.
- Chaque unité de contrôle-commande comprend une base arrière, qui porte des connecteurs électriques d'entrée, configurés pour alimenter en énergie électrique l'unité de contrôle-commande lorsque l'unité de contrôle-commande est montée dans l'armoire électrique, et des connecteurs électriques de sortie, configurés pour alimenter en énergie électrique la charge électrique raccordée à l'unité de contrôle-commande lorsque l'unité de contrôle-commande est montée dans l'armoire électrique. De plus, la base arrière des unités électromécaniques est identique à la base arrière des unités électroniques, une largeur de la base arrière est identique à la largeur des unités électroniques, et de préférence, chaque unité électromécanique comprend en outre une pièce d'élargissement, disposée sur un côté de la base arrière de l'unité électromécanique, de sorte que la somme de la largeur de la base arrière et d'une largeur de la pièce d'élargissement est égale à la largeur des unités électromécaniques.
- Chaque unité de contrôle-commande est un tiroir de contrôle-commande, mobiles dans la première ou la deuxième zone fonctionnelle entre trois positions principales :
   - une position de fonctionnement du tiroir de contrôle-commande, dans laquelle le tiroir de contrôle-commande est configuré pour être raccordé à la charge électrique et dans laquelle le tiroir de contrôle-commande est connecté à un module de communication de l'armoire électrique,
   - une position de test du tiroir de contrôle-commande, dans laquelle le tiroir de contrôle-commande est configuré pour ne pas être raccordé à la charge électrique et dans laquelle le tiroir de contrôle-commande est connecté au module de communication, et
   - une position déconnectée du tiroir de contrôle-commande, dans laquelle le tiroir de contrôle-commande est configuré pour ne pas être raccordé à la charge électrique et dans laquelle le tiroir de contrôle-commande n'est pas connecté au module de communication.
- Chaque tiroir de contrôle-commande comprend une paroi latérale portant un contact latéral mobile configuré pour permettre l'échange de données entre le tiroir de contrôle-commande et le module de communication, le contact latéral mobile étant fixe par rapport au module de communication lorsque le tiroir de contrôle-commande est déplacé entre sa position de fonctionnement et sa position de test, et dans laquelle la paroi latérale et le contact latéral mobile des unités électromécaniques, d'une part, et des unités électroniques, d'autre part, sont identiques.
- Chaque tiroir de contrôle-commande comprend un détecteur de position, configuré pour détecter si le tiroir de contrôle-commande est en position de fonctionnement, en position de test ou en position déconnectée, et un système de verrouillage, configuré pour verrouiller le tiroir de contrôle-commande en position de fonctionnement ou en position de test, et dans laquelle le détecteur de position et le mécanisme de verrouillage des unités électromécaniques, d'une part, et des unités électroniques, d'autre part, sont identiques.
- Le dispositif de protection de type magnétique de chaque unité électromécanique comprend un relais électromécanique, configuré pour couper l'alimentation de l'interrupteur commandé de l'unité électromécanique en cas de court-circuit se produisant au niveau de la charge électrique raccordée à l'unité électromécanique, cette coupure s'effectuant dans un temps supérieur à 5 ms.
- Le dispositif de protection commun de la deuxième zone fonctionnelle est de type hybride et comprend :
   - un semi-conducteur, configuré pour détecter un court-circuit se produisant au niveau d'une charge électrique raccordée à l'une des unités électroniques de la deuxième zone fonctionnelle, ou au niveau de l'une des unités électroniques, et
   - un élément de protection électromécanique, configuré pour couper l'alimentation des unités électroniques de la deuxième zone fonctionnelle, cette coupure s'effectuant dans un temps inférieur à 500 µs après détection du court-circuit.
- Une partie frontale de chaque unité électromécanique présente un interrupteur mécanique contrôlant le basculement entre un état ouvert et un état fermé du dispositif de protection de type magnétique de l'unité électromécanique, configuré pour être actionné par un utilisateur, et dans laquelle une face avant du dispositif de protection commun présente un interrupteur mécanique contrôlant le basculement entre un état ouvert et un état fermé du dispositif de protection commun, configuré pour être actionné par un utilisateur.
- L'armoire électrique comprend au moins deux modules fonctionnels, chaque module fonctionnel comprenant :
   - soit au moins une unité électromécanique, soit au moins deux unités électroniques,
   - si le module fonctionnel comprend des unités électroniques, un dispositif de protection commun,
   - un tronçon de bus informatique, connecté à toutes les unités de contrôle-commande du module fonctionnel,
   - autant de modules de raccordement que d'unités de contrôle-commande, chaque module de raccordement étant configuré pour raccorder une charge électrique à une unité de contrôle-commande,
   - autant de modules d'entrées-sorties que d'unités de contrôle-commande, chaque module d'entrée-sortie étant configuré pour relier le tronçon de bus informatique à une unité de contrôle-commande et à la charge électrique raccordée à cette unité de contrôle-commande et pour permettre l'échange de données de fonctionnement entre ladite charge électrique, d'une part, et ladite unité de contrôle-commande et le tronçon de bus informatique, d'autre part, et
   - une structure de support, sur laquelle chaque unité de contrôle-commande, le tronçon de bus informatique, chaque module de raccordement, chaque module d'entrée sortie et le cas échéant le dispositif de protection commun sont fixés.

De plus, chaque zone fonctionnelle accueille un module fonctionnel, les tronçons de bus informatique de tous les modules fonctionnel sont connectés entre eux et à un module de communication de l'armoire électrique, et le tronçon de bus informatique, les modules de raccordement et les modules d'entrées-sorties des modules fonctionnel comprenant une ou plusieurs unités électromécaniques, d'une part, et des modules fonctionnel comprenant une ou plusieurs unités électroniques, d'autre part, sont identiques.

L'invention sera mieux comprise et d'autres avantages de celle-ci apparaitront plus clairement à la lumière de la description qui va suivre d'un mode de réalisation d'une armoire électrique de raccordement conforme à son principe, donnée uniquement à titre d'exemple et faite en référence aux dessins annexés dans lesquels :
[Fig. 1] La figure 1 est un schéma de principe d'une armoire électrique conforme à l'invention ;
[Fig. 2] La figure 2 est une vue en perspective d'un premier module fonctionnel appartenant à l'armoire électrique de la figure 1 ;
[Fig. 3] La figure 3 est une vue en perspective d'un tiroir appartenant au module fonctionnel de la figure 2 ;
[Fig. 4] La figure 4 est une vue en perspective du tiroir de la figure 3, vu sous un autre angle ;
[Fig. 5] La figure 5 est une vue en perspective d'un dispositif de protection de type hybride appartenant au module fonctionnel de la figure 2 ;
[Fig. 6] La figure 6 est une vue en perspective d'une partie d'une structure appartenant au module fonctionnel de la figure 2 ;
[Fig. 7] La figure 7 est une vue en perspective d'un deuxième module fonctionnel appartenant à l'armoire électrique de la figure 1, vu sous un autre angle ;
[Fig. 8] La figure 8 est une vue en perspective d'une partie d'un troisième module fonctionnel appartenant à l'armoire électrique de la figure 1 ;
[Fig. 9] La figure 9 est une vue en perspective d'un tiroir appartenant au troisième module fonctionnel de la figure 8 ; et
[Fig. 10] La figure 10 est une vue en perspective du tiroir de la figure 9, vu sous un autre angle.

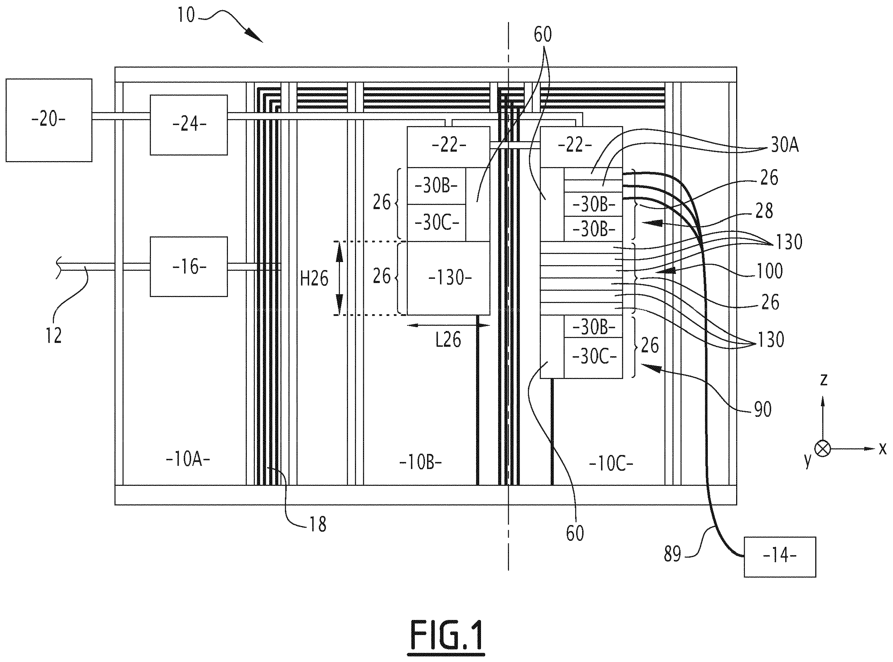

Une armoire électrique 10 est représentée à la figure 1. Cette armoire électrique est destinée à être intégrée à un réseau électrique partiellement représenté. Ce réseau électrique comprend d'une part, en amont de l'armoire électrique 10, des câbles d'alimentation 12 provenant par exemple d'un poste de transformation et d'autre part, en aval de l'armoire électrique, une ou des charges électriques 14.

L'armoire électrique 10 est une armoire de raccordement configurée pour raccorder les charges électriques 14 aux câbles d'alimentation 12.

Les charges électriques 14 peuvent par exemple être des moteurs électriques, tels que des moteurs triphasés, des réseaux de distribution d'électricité, ou encore des charges électriques pilotables, tels que des batteries ou des panneaux photovoltaïques.

En configuration installée de l'armoire électrique 10, l'armoire repose sur une surface horizontale, telle que par exemple le sol d'un bâtiment dans lequel l'armoire électrique 10 est installée.

On définit un axe longitudinal X de l'armoire électrique 10 comme étant l'axe de la plus grande dimension de l'armoire électrique 10, en pratique sa longueur, un axe transversal Y comme étant l'axe de la plus petite dimension de l'armoire électrique 10 et perpendiculaire à l'axe X, en pratique sa largeur, et un axe vertical Z comme étant le troisième axe d'un repère orthogonal comprenant les axes X et Y.

L'orientation des axes X, Y et Z est liée fixement à l'orientation de l'armoire électrique 10. L'orientation de l'armoire électrique 10 décrite dans le présent exposé correspond à sa configuration installée. Il est donc entendu que l'orientation des axes X, Y et Z varie lorsque l'orientation de l'armoire électrique 10 varie. Par exemple, l'axe Z peut ne pas être vertical lorsque l'armoire 10 n'est pas en configuration installée, par exemple lorsqu'elle est transportée. Les qualificatifs « haut », « bas » et « vertical » utilisés dans la suite de l'exposé s'entendent relativement à l'axe Z.

Dans la configuration installée ici décrite, le plan formé par les axes X et Y est horizontal et parallèle à la surface horizontale sur laquelle l'armoire repose lorsqu'elle est en configuration installée, alors que l'axe Z est perpendiculaire à cette surface horizontale. Le qualificatif « horizontal » utilisé dans la suite de l'exposé s'applique à tout élément contenu dans un plan parallèle au plan formé par les axes X et Y, en configuration installée de l'armoire électrique 10. Les qualificatifs « gauche » et « droite » s'entendent relativement à l'axe X et les qualificatifs « avant » et « arrière » s'entendent relativement à l'axe Y.

Le positionnement relatif des pièces et leur orientation décrits ci-après sont donnés à titre d'exemple uniquement et ne sont pas limitatifs. Sauf en cas de mention contraire explicite, ils s'entendent en configuration montée et installée de l'armoire électrique 10. Ainsi, lorsqu'il est fait mention de l'orientation d'une pièce vis-à-vis des axes X, Y et/ou Z, elle s'entend en configuration montée de l'armoire. Lorsque l'armoire 10 est stockée, transportée, non-assemblée ou en cours d'assemblage, entre-autres exemples, l'orientation des pièces et leur positionnement relatif peuvent varier.

Le câble d'alimentation 12 délivre à l'armoire électrique 10 une alimentation électrique principale, de préférence d'une tension de 400V triphasée avec neutre, de préférence à une fréquence 50Hz. Avantageusement, chaque phase et le neutre du câble d'alimentation 12 sont raccordés à une entrée d'un disjoncteur 16. En variante, le câble d'alimentation 12 délivre une alimentation d'une tension différente de 400V, une alimentation à une fréquence différence de 50Hz, une alimentation triphasés sans neutre, ou une alimentation monophasé. Le disjoncteur 16 comprend alors un nombre d'entrées adapté.

L'armoire électrique 10 comprend un jeu de barres 18 comprenant plusieurs barres d'alimentation, dans l'exemple quatre barres d'alimentation, chaque barre d'alimentation étant reliée à une sortie du disjoncteur 16. Le jeu de barres 18 permet de distribuer l'alimentation électrique provenant du câble d'alimentation 12 et passant par le disjoncteur 16 aux différents éléments disposés dans l'armoire électrique 10 et permettant le raccordement aux charges électriques 14.

Avantageusement, le disjoncteur 16 est disposé dans une colonne d'alimentation 10A de l'armoire électrique 10, et les éléments de l'armoire électrique permettant le raccordement aux charges électriques 14 sont répartis dans différentes colonnes de raccordement, dans l'exemple dans deux colonnes de raccordement 10B et 10C. En variante non-représentée, l'armoire électrique 10 comprend un nombre de colonnes de raccordement différent de deux, par exemple une colonne ou trois colonnes de raccordement.

L'armoire électrique 10 est contrôlée par un ordinateur industriel 20. En pratique, l'ordinateur industriel 20 comprend une unité de calcul non-représentée qui exécute un logiciel de gestion de l'armoire électrique 10.

En variante, l'ordinateur industriel 20 est remplacé par un système de contrôle et d'acquisition de données en temps réel, dit « SCADA », qui supervise le fonctionnement de l'armoire électrique 10, ou l'ordinateur est intégré dans un tel système.

Chaque colonne de raccordement 10B, 10C comprend un module de communication 22. Comme visible à la figure 1, le module de communication 22 est positionné à proximité de l'extrémité haute de chaque colonne de raccordement 10B, 10C. En variante non-représentée de l'invention, le module de communication 22 de chaque colonne de raccordement est positionné à l'extrémité basse de la colonne.

Le module de communication 22 d'une colonne de raccordement 10B, 10C permet de centraliser l'ensemble des informations provenant de cette colonne de raccordement et de commander la colonne de raccordement.

Les modules de communication 22 communiquent avec l'ordinateur industriel 20 par l'intermédiaire des câbles de communication ou par l'intermédiaire de liaisons sans fils, d'une part pour transmettre des informations sur le fonctionnement des colonnes de raccordement 10B, 10C et d'autre part pour recevoir les commandes provenant de l'ordinateur industriel et devant être transmises aux colonnes de raccordement.

Le module de communication 22 d'une colonne de raccordement 10B, 10C fait donc l'intermédiaire entre l'ordinateur industriel 22 et cette colonne de raccordement et permet de centraliser les échanges entre l'ordinateur et la colonne.

Avantageusement, tous les modules de communication 22 sont reliés à un commutateur central 24, disposé de préférence dans la colonne d'alimentation 10A. Ce commutateur central 24 fait l'intermédiaire entre les modules de communication 22 et l'ordinateur industriel 20, c'est-à-dire que les informations provenant de l'ordinateur industriel, par exemple des commandes, sont réparties entre les modules de communication 22 par le commutateur central 24 et que les informations provenant des modules de communication sont agrégées par le commutateur central avant d'être transmises à l'ordinateur industriel. En variante non-représentée de l'invention, l'armoire électrique 10 ne comprend pas de commutateur central 24 et les modules de communication 22 sont directement reliés à l'ordinateur industriel 20.

De préférence, les câbles de communication interne reliant l'ordinateur industriel 20, les modules de communication 22 et le commutateur central 24 sont des câbles utilisant le protocole Ethernet. En variante, les câbles de communication interne utilisent un autre protocole de réseau local, comme par exemple le protocole MODBUS ou PROFINET.

De manière générale, une colonne de raccordement 10B, 10C peut être configurée pour plusieurs usages différents :
- Une première configuration dans laquelle la colonne de raccordement permet le raccordement à des moteurs électriques, tels que par exemple des moteurs triphasés. La colonne de raccordement permet alors d'alimenter ces moteurs électriques et de les piloter. Dans cette première configuration, la colonne de raccordement est appelée « colonne de démarrage moteur ».
- Une deuxième configuration dans laquelle la colonne de raccordement permet le raccordement à des circuits électriques de distribution aval, tels que par exemple des tableaux électriques ou des armoires de distribution électrique. La colonne de raccordement permet alors de distribuer l'énergie provenant des câbles d'alimentation 12 vers plusieurs circuits aval, et de protéger ces circuits aval. Dans cette deuxième configuration, la colonne de raccordement est alors appelée « colonne de répartition de courant ».
- Une troisième configuration dans laquelle la colonne de raccordement permet le raccordement à des charges électriques pilotables, tels que par exemple des panneaux photovoltaïques ou des batteries. La colonne de raccordement permet alors d'alimenter ces circuits électriques et de les piloter. Dans cette troisième configuration, la colonne de raccordement est alors appelée « colonne de pilotage de charge ».

Dans l'exemple, les colonnes de raccordement 10A, 10B sont des colonnes de démarrage moteur. Certains éléments mentionnés ci-après sont décrits dans le cadre d'une colonne de démarrage moteur, mais leur application ne se limite pas exclusivement à leur utilisation dans une colonne de démarrage moteur. Ainsi, certains éléments introduits ci-après peuvent également s'appliquer à des éléments utilisés dans une colonne de répartition de courant ou dans une colonne de de pilotage de charge, par exemple.

Dans chaque colonne de raccordement 10B, 10C, l'armoire électrique 10 comprend plusieurs zones fonctionnelles 26, juxtaposées verticalement, chaque zone fonctionnelle accueillant un ou plusieurs éléments de l'armoire électrique permettant le raccordement aux charges électriques 14.

Toutes les zones fonctionnelles 26 de l'armoire électrique 10 ont les mêmes dimensions. On note « H26 » la hauteur d'une zone fonctionnelle 26, mesurée selon l'axe vertical Z, « L26 » la largeur d'une zone fonctionnelle, mesurée selon l'axe longitudinal X et « P26 » la profondeur d'une zone fonctionnelles, mesurée selon l'axe transversal Y.

En pratique, tous les éléments d'une zone fonctionnelle 26 sont regroupés en un module fonctionnel. Plusieurs modules fonctionnels appartenant à l'armoire électrique 10 sont décrits dans la suite de l'exposé. Dans l'exemple, ces modules fonctionnels sont donc des modules destinés à être raccordés à des moteurs électriques, c'est-à-dire que ces modules fonctionnels sont des modules de démarrage moteur.

La configuration et l'architecture de ces modules se transposent à d'autres configurations, comme par exemple dans le cas d'une colonne de répartition de courant, où le module fonctionnel correspond alors à un module de répartition qui permet de répartir un courant électrique vers un ou plusieurs circuits aval et de protéger ces circuits, ou dans le cas d'une colonne de pilotage de charge, où le module fonctionnel correspond alors à un module de pilotage qui permet d'alimenter des charges électriques et de les piloter. D'autres usages sont envisageables.

Dans l'exemple de la figure 1, l'armoire électrique 10 comprend cinq zones fonctionnelles 26, chacune de ces zones fonctionnelles accueillant un module fonctionnel. Ici, l'armoire électrique comprend donc cinq modules fonctionnels. En pratique, la colonne de raccordement 10B comprend deux modules fonctionnels et la colonne de raccordement 10C comprend trois modules fonctionnels.

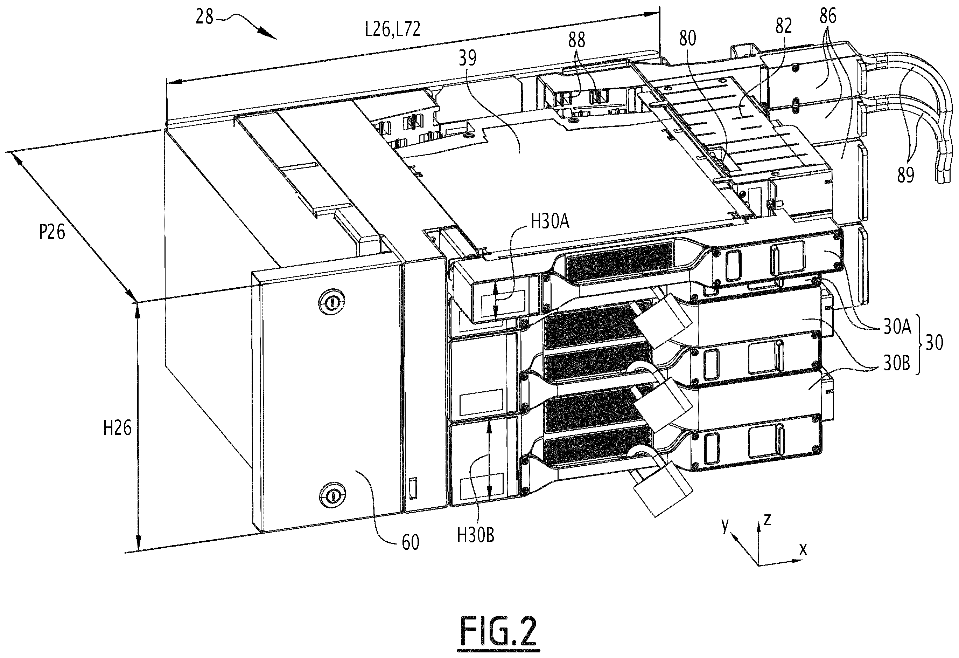

On décrit à présent, en référence à la figure 2, un premier module fonctionnel 28. Dans l'exemple, le module fonctionnel 28 est disposé en partie supérieure de la colonne de raccordement 10C, entre le module de communication 22 et les deux autres modules fonctionnels de la colonne de raccordement 10C.

Le module fonctionnel 28 a une hauteur, mesurée selon l'axe verticale, identique à la hauteur de la zone fonctionnel 26 dans laquelle il est monté, c'est-à-dire une hauteur égale à H26. De même, la profondeur du module fonctionnel 28 est égale à P26.

Le module fonctionnel 28 comprend quatre unités de contrôle-commande 30, juxtaposées verticalement dans le module fonctionnel, qui permettent chacune le raccordement électrique d'une charge électrique 14 à l'armoire électrique 10.

Dans l'exemple représenté, les unités de contrôle-commande 30 sont des tiroirs de contrôle-commande qui peuvent donc être installés dans, et retirés de, le module fonctionnel 28 de façon simple et rapide, par un mouvement de translation selon l'axe transversal Y. En variante non-représentée de l'invention, les unités de contrôle-commande 30 sont des unités fixes de l'armoire, qui sont assemblées dans le module fonctionnel 28 lors de l'installation de l'armoire, par exemple par vissage dans le module fonctionnel.

Avantageusement, lorsque les unités de contrôle-commande 30 sont des tiroirs, chacun de ces tiroirs est mobile dans le module fonctionnel 28 entre trois positions :
- Une position de fonctionnement, dans laquelle le tiroir est entièrement inséré dans le module fonctionnel. Cette position correspond à la position de fonctionnement normal du tiroir, c'est-à-dire que, d'une part, le tiroir alimente en énergie électrique la charge électrique 14 qui y est raccordée, et d'autre part, le tiroir est connecté au module de communication 22 de la colonne de raccordement 10C. Les trois tiroirs inférieurs sont représentés en position de fonctionnement à la figure 2.
- Une position de test, dans laquelle le tiroir est partiellement inséré dans le module fonctionnel. Cette position correspond à une position intermédiaire dans laquelle le tiroir fonctionne, c'est-à-dire que les éléments qu'il contient sont alimentés en énergie électrique et qu'il est connecté au module de communication 22, mais que le tiroir n'alimente pas de charge électrique 14. Le tiroir supérieur est représenté en position de test à la figure 2.
- Une position déconnectée du tiroir, dans laquelle le tiroir est partiellement ou complètement sorti du module fonctionnel et dans laquelle le tiroir n'est pas alimenté en énergie électrique, n'est pas connecté au module de communication et n'alimente pas de charge électrique 14.

De manière générale, les unités de contrôle-commande 30 permettent également le contrôle des charges électriques 14 qui y sont raccordées. Ce contrôle, également appelé pilotage, consiste, par exemple, lorsque la charge électrique est un moteur, à piloter ce moteur, c'est-à-dire à le démarrer, l'arrêter et éventuellement à contrôler sa vitesse, ou encore, lorsque la charge électrique est un réseau de distribution, à délivrer la tension et l'intensité nécessaire au bon fonctionnement de ce réseau de distribution.

En outre, les unités de contrôle-commande 30 permettent également la surveillance des charges électriques 14 qui y sont raccordées. Cette surveillance consiste par exemple à mesurer la tension et l'intensité délivrée à la charge 14, ou encore à récupérer des informations provenant de capteurs tels que par exemple des capteurs de position ou de vitesse de rotation ou des capteurs de température lorsque la charge 14 est un moteur.

Ainsi, chaque unité de contrôle-commande 30 peut avoir un rôle de raccordement d'une charge électrique 14, de contrôle de cette charge et de surveillance de cette charge. Toutefois, selon le type de charge électrique raccordée à une unité de contrôle-commande, cette unité de contrôle-commande peut ne pas avoir de rôle de pilotage de cette charge, ou peut ne pas avoir de rôle de contrôle de la charge.

Dans l'exemple représenté, la hauteur des unités de contrôle-commande 30 peut prendre plusieurs valeurs définies. On définit une hauteur de base d'une unité de contrôle-commande comme une hauteur unitaire, notée « U ». La hauteur d'une unité de contrôle-commande peut être égale à un multiple entier de cette hauteur de base, jusqu'à une limite de six fois la hauteur unitaire U.

Ainsi, une unité de contrôle-commande peut occuper une hauteur de 1U, 2U, 3U, 4U, 5U ou 6U. De préférence, la hauteur unitaire U est égale à 50 mm. Ainsi, une unité de contrôle-commande 138 de hauteur 6U aura, dans cet exemple, une hauteur de 300 mm.

Chaque module fonctionnel est configuré pour accueillir toute combinaison techniquement admissible d'unités de contrôle-commande 30, selon la hauteur de ces unités de contrôle-commande. Par exemple, un module fonctionnel peut accueillir :
- six unités de contrôle-commande de hauteur 1U, comme représenté dans la zone fonctionnelle intermédiaire de la colonne 10C à la figure 1, ou
- trois unités de contrôle-commande de hauteur 2U, ou
- une unité de contrôle-commande de hauteur 6U, comme représenté dans la zone fonctionnelle inférieure de la colonne 10B à la figure 1, ou
- une unité de contrôle-commande de hauteur 2U et une unité de contrôle-commande de hauteur 4U, comme représenté dans la zone fonctionnelle supérieure de la colonne 10B et dans la zone fonctionnelle inférieure de la colonne 10C à la figure 1,
- deux unités de contrôle-commande de hauteur 2U et deux unités de contrôle-commande 1U, comme représenté dans la zone fonctionnelle supérieure de la colonne 10C à la figure 1.

Ces exemples ne sont pas limitatifs. D'autres répartitions des unités de contrôle-commande 30 au sein des zones fonctionnelles sont envisageables.

Dans le module fonctionnel 28 représenté à la figure 2, parmi les unités de contrôle-commande 30, on distingue deux unités de contrôle-commande 30A de hauteur H30A égale à 1U, et deux unités de contrôle-commande 30B de hauteur H30B égale à 2U.

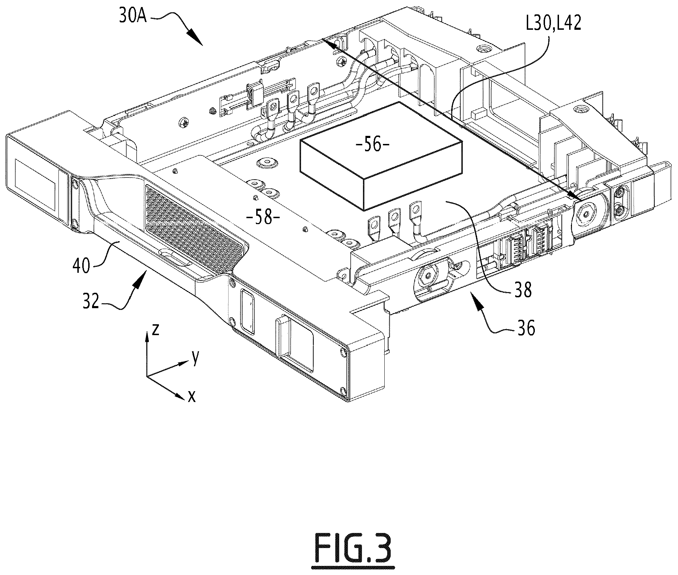

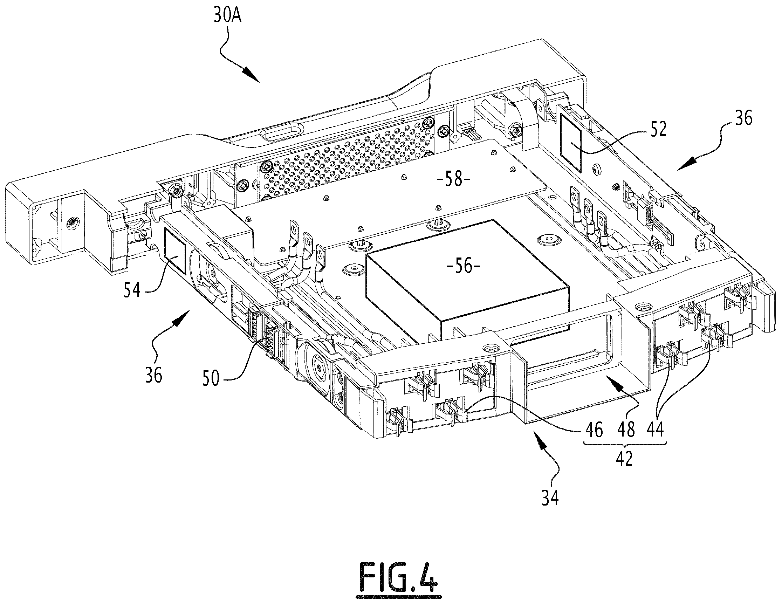

L'une des deux unités de contrôle-commande 30A est visible plus en détail en référence aux figures 3 et 4.

L'unité de contrôle-commande 30A est de forme globalement parallélépipédique et comprend une partie frontale 32 et une partie arrière 34, qui s'étendent parallèlement à l'axe X, deux parois latérales 36, qui s'étendent parallèlement à l'axe Y, un fond 38 qui s'étend entre les parties frontale et arrière et les parois latérales, et un capot 39, visible à la figure 2 et non-représenté aux figures 3 et 4. Le fond 38 s'étend en pratique dans un plan horizontal, perpendiculaire à l'axe vertical Z.

On note « L30 » la largeur principale de l'unité de contrôle-commande 30A, mesurée selon l'axe X entre les deux parois latérales 36.

L'unité de contrôle-commande 30A est configurée pour pouvoir être déplacé entre ses positions de fonctionnement, de test et déconnectée à l'aide d'une poignée 40, ménagée dans sa partie frontale 32, et prévue pour être manœuvrée par un intervenant.

Au niveau de sa partie arrière 34, l'unité de contrôle-commande 30A comprend une base arrière 42, qui porte des connecteurs électriques d'entrée 44, des connecteurs électriques de sortie 46 et, de préférence, un orifice de ventilation 48 disposé entre les connecteurs électriques d'entrée et les connecteurs électriques de sortie. Dans l'exemple, l'unité de contrôle-commande 30A comprend quatre connecteurs électriques d'entrée et quatre connecteurs électriques de sortie. La largeur L42 de la base arrière 42 est identique à la largeur L30 de l'unité de contrôle-commande 30A.

Lorsque l'unité de contrôle-commande 30A est en position de fonctionnement, c'est-à-dire lorsqu'elle est montée dans l'armoire électrique 10, les connecteurs électriques d'entrée 44 sont prévus pour être électriquement connectés au jeu de barres 18, alimentant ainsi en énergie électrique l'unité de contrôle-commande, et les connecteurs électriques de sortie 46 sont prévus pour alimenter en énergie la charge électrique 14 raccordée à l'unité de contrôle-commande.

Avantageusement, l'unité de contrôle-commande 30A comprend un contact latéral mobile 50, disposé sur l'une des deux parois latérales 36. Le contact latéral mobile connecte l'unité de contrôle-commande 30A au module de communication 22 de la colonne de raccordement 10C, c'est-à-dire qu'il permet l'échange de données entre l'unité de contrôle-commande et le module de communication, ou la fourniture d'une tension électrique auxiliaire délivrée par le module de communication à l'unité de contrôle-commande. En pratique, le contact latéral mobile est monté de manière mobile dans l'une des deux parois latérales 36, de sorte que, lorsque l'unité de contrôle-commande est déplacée entre ses positions de test et de fonctionnement, le contact latéral mobile se déplace, selon l'axe Y, par rapport à l'unité de contrôle-commande, et est fixe par rapport au module de communication, ce qui permet de maintenir la connexion entre l'unité de contrôle-commande et le module de communication pendant le déplacement de l'unité de contrôle-commande.

Avantageusement, l'unité de contrôle-commande 30A comprend un détecteur de position 52, disposé sur l'une des deux parois latérales 36, qui permet de détecter si l'unité de contrôle-commande est en position de fonctionnement, en position de test ou en position déconnectée. Le détecteur de position 52 comprend, par exemple, un actionneur qui coopère avec une structure du module fonctionnel 28 pour actionner des interrupteurs, ou des capteurs, lorsque l'unité de contrôle-commande est en position de test ou en position de fonctionnement.

Avantageusement, l'unité de contrôle-commande 30A comprend un système de verrouillage 54, disposé sur l'une des deux parois latérales 36, qui permet de verrouiller l'unité de contrôle-commande en position de test ou en position de verrouillage, par exemple à l'aide d'un verrou électromagnétique. Grâce au système de verrouillage 54, il est, par exemple, possible d'empêcher un utilisateur de basculer l'unité de contrôle-commande 30A depuis sa position de fonctionnement vers sa position de test si une charge électrique 14 est alimentée par l'unité de contrôle-commande, ou depuis sa position de test vers sa position de fonctionnement si une charge électrique 14 raccordée à l'unité de contrôle-commande n'est pas dans un état de fonctionnement compatible avec son démarrage.

L'unité de contrôle-commande 30A comprend un interrupteur commandé 56, représenté de manière schématique aux figures 3 et 4. L'interrupteur commandé est prévu pour permettre ou interrompre l'alimentation de la charge électrique 14 reliée à l'unité de contrôle-commande 30A, en connectant électriquement, ou en isolant électriquement, les connecteurs électriques de sortie 46 aux connecteurs électrique d'entrée 44. L'interrupteur commandé 56 est par exemple un contacteur. Ainsi, l'état de l'interrupteur commandé 56 détermine si la charge électrique raccordée à l'unité de contrôle-commande est en fonctionnement ou à l'arrêt.

L'unité de contrôle-commande 30A comprend un dispositif électronique d'analyse 58, qui est dans l'exemple une carte électronique. Le dispositif électronique d'analyse 58 est en pratique connecté au module de communication 22 de la colonne de raccordement 10C, par l'intermédiaire du contact latéral mobile 50. Ce dispositif contrôle l'état de l'interrupteur commandé 56, à partir des commandes provenant du module de communication 22.

Avantageusement, le dispositif électronique d'analyse 58 réalise également des fonctions de surveillance du fonctionnement de l'unité de contrôle-commande 30A et de la charge électrique 14 qui y est raccordée, par exemple en surveillant l'intensité du courant délivré à la charge électrique 14. Les données issues de ces fonctions de surveillance sont transmises au module de communication 22 de la colonne de raccordement 10C.

Avantageusement, le dispositif électronique d'analyse 58 assure également une protection thermique de l'unité de contrôle-commande 30A. En d'autres termes, le dispositif de électronique d'analyse 58 agit comme un dispositif de protection thermique. De préférence, cette protection thermique est réalisée de manière électronique, le dispositif électronique d'analyse 58 embarquant un capteur de courant par phase et un microprocesseur exécutant un algorithme analysant les courants mesurés pour détecter des signaux représentatifs de la présence d'un défaut thermique, tel que par exemple une augmentation de courant ou un déséquilibre dans le courant mesuré entre plusieurs phases. Le dispositif électronique d'analyse 58 est donc également nommé dispositif électronique d'analyse et de protection thermique.

En pratique, les unités de contrôle-commande 30B diffèrent de l'unité de contrôle-commande 30A décrite ci-dessus en ce que leur hauteur H30B est différente, permettant d'accueillir un interrupteur commandé 56 ayant des dimensions plus importantes. Les unités de contrôle-commande 30B comprennent ainsi une partie arrière, deux parois latérales et un fond identiques à ceux de l'unité de contrôle-commande 30A décrite ci-dessus. Les unités de contrôle-commande 30B comprennent également une partie frontale, avec une poignée. La hauteur de cette partie frontale est égale à la hauteur H30B. Ainsi, il est simple d'adapter la hauteur d'une unité de contrôle-commande, puisque seul le capot et la partie frontale sont à modifier. Il est particulièrement avantageux de pouvoir simplement adapter la hauteur d'une unité de contrôle-commande, car cela permet de modifier simplement les dimensions de l'interrupteur commandé 56, notamment en fonction de la puissance électrique consommée par la charge électrique 14 raccordée à cette unité de contrôle-commande, car les dimensions d'un interrupteur commandé dépendent de la puissance du courant électrique circulant par l'interrupteur commandé.

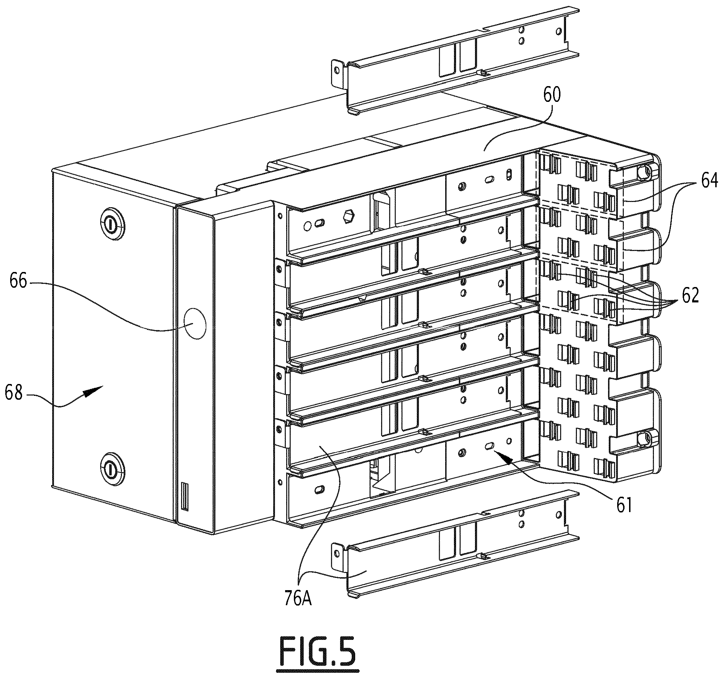

Pour assurer la protection électrique des unités de contrôle-commande 30, notamment en cas de défaillance des charges électriques qui y sont raccordées, comme par exemple un court-circuit, le module fonctionnel 28 comprend également un dispositif de protection 60, mieux visible à la figure 5. Le dispositif de protection 60 est distinct des unités de contrôle-commande 30, c'est-à-dire qu'il est situé à l'extérieur des unités de contrôle-commande qu'il protège, au sein d'un même module fonctionnelle 28.

Avantageusement, le dispositif de protection 60 s'étend sur toute la hauteur du module fonctionnel 28. En d'autres termes, la hauteur du dispositif de protection 60 est égale à H26. En pratique, le dispositif de protection 60 est dit « commun », car il est configuré pour protéger électriquement toutes les unités de contrôle-commande 30 du module fonctionnel 28, c'est-à-dire les deux unités 30A et les deux unités 30B, ainsi que les charges électriques 14 qui sont raccordées à ces unités de contrôle-commande. Ainsi, et bien que le dispositif de protection 60 soit en mesure de protéger une unique unité de contrôle-commande, il est particulièrement adapté pour protéger au moins deux unités de contrôle-commande. En outre, le dispositif de protection 60 est disposé, selon l'axe longitudinal X, sur un côté des unités de contrôle-commande, dans l'exemple de la figure 2 à gauche des unités de contrôle-commande. Ainsi, une paroi latérale 61 du dispositif de protection 60 est en regard des unités de contrôle-commande 30 lorsque le module fonctionnel 28 est assemblé.

En pratique, le dispositif de protection 60 est interposé électriquement entre le jeu de barres 18 et l'interrupteur commandé 56 des unités de contrôle-commande 30. En d'autres termes, le dispositif de protection 60 est électriquement connecté d'une part au jeu de barres et d'autre part à l'interrupteur commandé de chacune des unités de contrôle-commande. Le dispositif de protection 60 est commutable entre un état ouvert, dans lequel les interrupteurs commandés 56 des unités de contrôle-commande 30 ne sont pas alimentées en énergie électrique, et un état fermé, dans lequel les interrupteurs commandés des unités de contrôle-commande sont alimentées en énergie électrique. Le raccordement du dispositif de protection au jeu de barres n'est pas détaillé ici, mais peut s'effectuer, par exemple, à l'aide de câbles électriques, de barres conductrices, ou de connecteurs adaptés.

Le dispositif de protection 60 comprend plusieurs connecteurs électriques de sortie 62, répartis par groupes, notés 64. Dans l'exemple, chaque groupe 64 comprend quatre connecteurs électriques de sortie, et le dispositif de protection 60 comprend six groupes 64. Chaque groupe 64 de connecteurs électriques de sortie 62 est prévu pour être raccordé aux connecteurs électriques d'entrée 44 d'une unité de contrôle-commande 30, permettant ainsi la connexion électrique entre le dispositif de protection et l'unité de contrôle-commande.

Dans l'exemple, puisque le module fonctionnel 28 comprend quatre unités de contrôle-commande 30, alors quatre des six groupes 64 sont connectés aux connecteurs électriques d'entrée 44 des unités de contrôle-commande 30, les deux autres groupes 64 n'étant alors pas utilisés.

En pratique, les groupes 64 sont utilisés, ou non, en fonction de la combinaison d'unités de contrôle-commande 30 installée dans le module fonctionnel 28.

Les connecteurs électriques de sortie 62 s'étendent depuis la paroi latérale 61 du dispositif de protection 60, et sont disposés au niveau de l'arrière du dispositif de protection.

Le dispositif de protection 60 est de type hybride, c'est-à-dire qu'il présente des performances accrues par rapport à un dispositif de protection magnétique, ou qu'il comporte plus de fonctions qu'un dispositif de protection magnétique. Dans l'exemple, le dispositif de protection 60 de type hybride comprend un élément de protection électromécanique associé à un semi-conducteur, le semi-conducteur étant connecté en parallèle de l'élément de protection électromécanique, et le dispositif de protection de type hybride comprend également un élément de détection de court-circuit. Le dispositif de protection de type hybride est configurés pour couper l'alimentation de toutes les unités de contrôle-commande 30 en cas de court-circuit au niveau d'une charge électrique 14 raccordée à l'une des unités de contrôle-commande, c'est-à-dire pour basculer le dispositif de protection en état ouvert. Cette coupure d'alimentation des unités de contrôle-commande entraîne ainsi la coupure d'alimentation des charges électriques 14 qui y sont raccordées, et permet d'interrompre le défaut électrique, protégeant ainsi les unités de contrôle-commande et les charges électriques. En temps normal, l'alimentation électrique des unités de contrôle-commande 30 passe par l'élément de protection électromécanique et ne passe pas par le semi-conducteur.

En pratique, dans l'exemple, l'élément de détection de court-circuit est apte à détecter un court-circuit dans un temps inférieur à 50 µs après l'apparition du court-circuit. Lorsqu'un court-circuit se produit au niveau d'une charge électrique, l'élément de détection de court-circuit détecte ce court-circuit et entraîne l'ouverture de l'élément de protection électromécanique, cette ouverture s'effectuant dans un temps inférieur à 500 µs après détection du court-circuit. L'alimentation électrique des unités de contrôle-commande 30 passe alors par le semi-conducteur. Le semi-conducteur interrompt ensuite l'alimentation électrique, avec une tension de coupure supérieure à la tension de coupure de l'élément de protection électromécanique, par exemple deux fois supérieure. Cette tension de coupure plus importante permet d'interrompre plus rapidement l'alimentation des unités de contrôle-commande 30.

Grâce à l'utilisation combinée d'un élément de protection électromécanique, d'un semi-conducteur et d'un élément de détection de court-circuit, cette coupure s'effectue dans un temps inférieur à 500 µs après détection du court-circuit, notamment car le semi-conducteur permet une coupure rapide de l'alimentation. Cette coupure rapide permet de limiter les dégradations provoquées par le défaut électrique. Notamment, lorsque le défaut électrique est un court-circuit, l'énergie thermique générée par ce court-circuit est minimisée, ce qui permet de minimiser l'échauffement des unités de contrôle-commande 30.

En outre, une fois l'alimentation des unités de contrôle-commande interrompue, le semi-conducteur du dispositif de protection 60 est en mesure de détecter la provenance du défaut électrique, c'est-à-dire à quelle unité de contrôle-commande 30 la charge électrique 14 défaillant est raccordée, puis d'isoler cette unité de contrôle-commande pour rétablir l'alimentation des unités de contrôle-commande raccordées aux charges électriques non-défaillantes. En d'autres termes, après interruption de l'alimentation de l'ensemble des unités de contrôle-commande, le dispositif de protection 60 ne maintient interrompue que l'alimentation de la charge électrique défaillante, ce qui est particulièrement avantageux pour limiter l'interruption du fonctionnement des autres charges électriques raccordées aux unités de contrôle-commande du module fonctionnel 28. Le dispositif de protection 60 est donc en mesure d'être en état partiellement ouvert, ou partiellement fermé, c'est-à-dire ouvert pour certaines unités de contrôle-commande 30 et fermé pour d'autres unités de contrôle-commande du module fonctionnel 28. Avantageusement, le délai séparant le basculement initial en état ouvert, lié à la détection d'un défaut sur une charge électrique, et le basculement en état partiellement fermé rétablissement l'alimentation des autres charges électriques raccordées au même module fonctionnel, est suffisamment faible, de l'ordre de 100 ms, pour que le fonctionnement des autres charges électriques ne soit pas interrompu.

Le dispositif de protection 60 comprend en outre un interrupteur mécanique 66 disposé sur une face avant 68 du dispositif de protection. L'interrupteur mécanique 66 est prévu pour être actionné par un utilisateur, et permet de basculer le dispositif de protection 60 entre ses états ouvert et fermé.

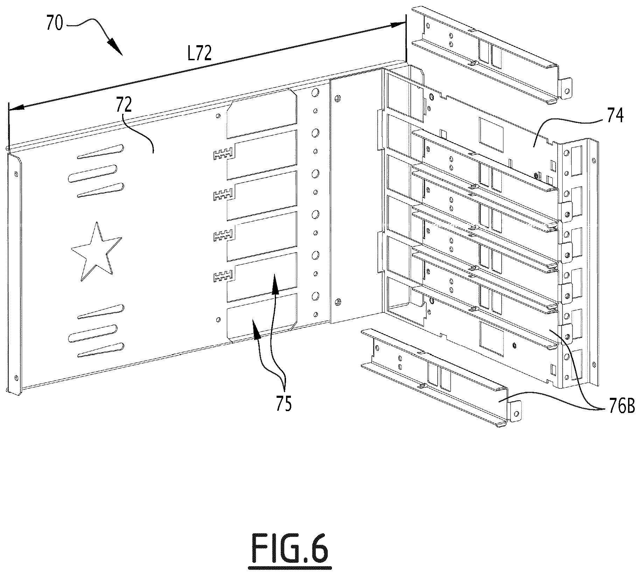

Le module fonctionnel 28 comprend une structure de support 70, partiellement visible à la figure 6. Ici, la structure de support 70 comprend un fond 72 et une paroi latérale 74, et, de préférence, une plaque inférieure et une plaque supérieure, qui sont horizontales et non-représentées sur les figures. Lorsque le module fonctionnel 28 est assemblé, le dispositif de protection 60 est fixé à la structure de support 70, et notamment au fond 72, et la paroi latérale 74 de la structure de support 70 est parallèle à la paroi latérale 61 du dispositif de protection.

Avantageusement, le fond 72 présente une largeur L72 égale à la largeur L26 des zones fonctionnelles 26. Ainsi, la structure de support 70 est adaptée pour être reçue dans les zones fonctionnelles.

Avantageusement, des ouvertures 75 sont ménagées dans le fond 72. Lorsque les unités de contrôle-commande 30 sont montées dans le module fonctionnel 28, l'orifice de ventilation 48 de la base arrière 42 de chaque unité de contrôle-commande 30 est en regard d'une ouverture 75, permettant ainsi la ventilation de l'intérieur des unités de contrôle-commande.

Le module fonctionnel 28 comprend également des rails 76A et 76B, de préférence six rails 76A et six rails 76B, qui s'étendent selon l'axe transversal Y. Les rails 76A sont disposés sur la paroi latérale 61 du dispositif de protection 60 et les rails 76B sont disposés sur la paroi latérale 74 de la structure de support 70, de sorte qu'un rail 76B soit disposé en regard de chaque rail 76A. Les rails 76A et 76B forment ainsi des paires de rails, dans l'exemple six paires de rails.

À la figure 5, le rail 76A supérieur et le rail 76A inférieur sont montrés en vue éclatée, c'est-à-dire que ces rails sont démontés de la paroi latérale 61. De même, à la figure 6, le rail 76B supérieur et le rail 76B inférieur sont montrés en vue éclatée.

Les rails 76A et 76B permettent le montage des unités de contrôle-commande 30 dans le module fonctionnel 28, et permettent avantageusement, lorsque les unités de contrôle-commande sont des tiroirs, leur déplacement dans le module fonctionnel entre leurs positions de fonctionnement, de test et déconnectée.

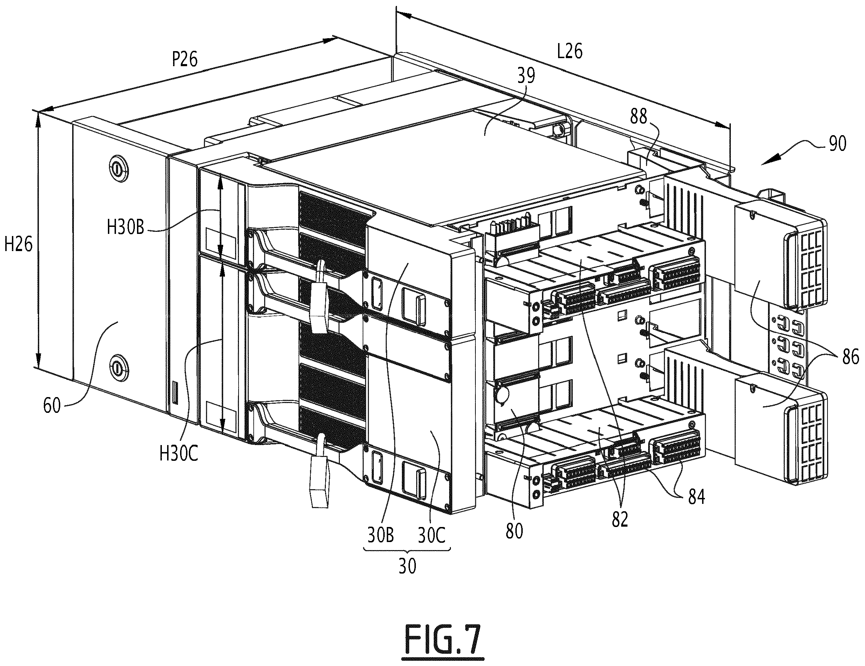

Avantageusement, le module fonctionnel 28 comprend un tronçon de bus informatique 80, qui s'étend verticalement. Ce tronçon de module informatique est partiellement visible à la figure 2. Un tronçon de module informatique 80 comparable est mieux visible à la figure 7, qui représente un autre module fonctionnel décrit ci-après.

Lorsque l'armoire électrique 10 est assemblée, les tronçons de bus informatique 80 de tous les modules fonctionnels d'une colonne de raccordement sont connectés entre eux, et le tronçon de bus informatique du module fonctionnel le plus haut est en outre connecté au module de communication 22 de cette colonne de raccordement, permettant ainsi l'échange de données entre chaque module fonctionnel et le module de communication. En d'autres termes, un module fonctionnel est connecté au module de communication de sa colonne de raccordement par l'intermédiaire du tronçon de bus informatique de ce module fonctionnel.

En outre, de préférence, les tronçons de bus informatique 80 d'une colonne de raccordement permettent également d'alimenter les modules fonctionnels de cette colonne de raccordement avec une tension électrique auxiliaire délivrée par le module de communication 22 de cette colonne de raccordement. Cette tension électrique auxiliaire est par exemple une tension de 12V, de 24V, de 48V, de 110V ou de 230V, en courant continu ou en courant alternatif. Cette tension électrique auxiliaire permet le fonctionnement du module fonctionnel 28, par exemple en alimentant la carte électronique 58 ou le système de verrouillage 54 de chaque unité de contrôle-commande 30.

En pratique, la tension électrique auxiliaire est fournie au module fonctionnel 28 et à ses unités de contrôle-commande 30 quelle que soit l'état du dispositif de protection 60, c'est-à-dire que le dispositif de protection soit en état ouvert ou fermé. Ainsi, même en cas de coupure de l'alimentation électrique des unités de contrôle-commande 30 et donc des charges électriques 14 par le dispositif de protection, le fonctionnement des unités de contrôle-commande, par exemple de la carte électronique 58 ou du système de verrouillage 54, est assuré.

Avantageusement, le module fonctionnel 28 comprend des modules d'entrée-sortie 82, en pratique autant de modules d'entrée-sortie que d'unités de contrôle-commande 30, c'est-à-dire, dans l'exemple, quatre modules d'entrée-sortie. En pratique, chaque module d'entrée-sortie 82 est associé à une unité de contrôle-commande 30.

Chaque module d'entrée-sortie 82 comprend une interface de connexion, non-visible sur les figures. Lorsque l'unité de contrôle-commande associée au module d'entrée-sortie est montée dans le module fonctionne 28, l'interface de connexion est connectée au contact latéral mobile 50 de l'unité de contrôle-commande.

Chaque module d'entrée-sortie 82 comprend également un connecteur, non-visible sur les figures, qui est connecté au tronçon de bus informatique 80 lorsque le module fonctionnel 28 est assemblé.

Ainsi, le module d'entrée-sortie associé à une unité de contrôle-commande 30 permet de connecter l'unité de contrôle-commande au tronçon de bus informatique, par l'intermédiaire de l'interface de communication et du connecteur. Cette connexion permet l'échange de données entre l'unité de contrôle-commande et le module de communication, et/ou la fourniture à l'unité de contrôle-commande de la tension électrique auxiliaire délivrée par le module de communication.

Avantageusement, chaque unité de contrôle-commande 30 comprend également une première carte de communication sans fil, non-représentée, qui communique avec une deuxième carte de communication sans fil, également non-représentée, appartenant au module d'entrée-sortie 82 associé à cette unité de contrôle-commande lorsque l'unité de contrôle-commande est montée dans le module fonctionnel 28. Les première et deuxième cartes de communication sans fil permettent l'échange de données entre l'unité de contrôle-commande et le module d'entrée-sortie. Lorsque de telles cartes de communication sans fil sont utilisées, le contact latéral mobile 50 est de préférence utilisé uniquement pour la fourniture à l'unité de contrôle-commande de la tension électrique auxiliaire délivrée par le module de communication.

Chaque module d'entrée-sortie 82 comprend également des borniers de connexion non représentés pour le module fonctionnel 28. Des borniers de connexion comparables sont visibles à la figure 7, avec la référence 84, pour le deuxième module fonctionnel. Les borniers de connexion permettent de connecter le module d'entrée-sortie 82 associé à une unité de contrôle-commande 30 à la charge électrique 14 raccordée à cette unité de contrôle-commande. En pratique, les borniers de connexion sont prévus pour délivrer à la charge électrique 14 la tension électrique auxiliaire fournie par le module de communication 22, cette tension électrique auxiliaire permettant par exemple d'alimenter des fonctions annexes de la charge électrique, comme des capteurs de fonctionnement. Les borniers de connexion sont également prévus pour permettre l'échange de données entre, d'une part, la charge électrique 14 et, d'autre part, le tronçon de bus informatique 80 et l'unité de contrôle-commande 30, ces données pouvant pas exemple être des signaux provenant de capteurs de fonctionnement ou un signal d'arrêt d'urgence.

De préférence, les modules d'entrée-sortie 82 s'étendent partiellement en-dehors de la zone fonctionnelle 26 dans laquelle le module fonctionnel 28 est installé, de sorte à faciliter le raccordement de câbles électriques sur les borniers de connexion à l'intérieur de la colonne de raccordement 10C.

Avantageusement, le module fonctionnel 28 comprend des modules de raccordement 86, en pratique autant de modules de raccordement que d'unités de contrôle-commande 30, c'est-à-dire, dans l'exemple, quatre modules de raccordement. En pratique, chaque module de raccordement 86 est associé à une unité de contrôle-commande 30.

Chaque module de raccordement 86 est connecté, d'une part, à l'unité de contrôle-commande 30 qui lui est associée, et, d'autre part, à la charge électrique 14 associée à l'unité de contrôle-commande. En d'autres termes, chaque module de raccordement 86 permet de raccorder, et d'alimenter, une charge électrique 14 à une unité de contrôle-commande 30.

Chaque module de raccordement 86 comprend des connecteurs électriques 88, dans l'exemple quatre connecteurs électriques 88. Ces connecteurs électriques sont complémentaires des connecteurs électriques de sortie 46 des unités de contrôle-commande 30. Ainsi, les connecteurs électriques 88 d'un module de raccordement 86 sont prévus pour être raccordés aux connecteurs électriques de sortie 46 de l'unité de contrôle-commande 30 associée à ce module de raccordement, permettant ainsi la connexion électrique entre le module de raccordement et l'unité de contrôle-commande.

Chaque module de raccordement 86 comprend des conducteurs internes, non-visibles sur les figures, qui relient les connecteurs électriques 88 à des câbles électriques 89, ces câbles électriques permettant en pratique de raccorder le module de raccordement à une charge électrique 14. En pratique, le dimensionnement de ces conducteurs internes dépend de la puissance électrique consommée par la charge électrique 14, et donc des dimensions de l'unité de contrôle-commande 30 à laquelle la charge électrique est raccordée. Ainsi, le dimensionnement d'un module de raccordement 86 est adapté à la hauteur de l'unité de contrôle-commande 30 associée. Dans l'exemple, chaque module de raccordement 86 du module fonctionnel 28 est choisi parmi trois modules de raccordement de dimensions différentes, dont les hauteurs valent 1U, 2U ou 3U.

De préférence, les modules de raccordement 86 s'étendent partiellement en-dehors de la zone fonctionnelle 26 dans laquelle le module fonctionnel 28 est installé, de sorte à faciliter le raccordement des câbles électriques 89 à l'intérieur de la colonne de raccordement 10C.

L'alimentation d'une charge électrique 14 s'effectue donc par l'intermédiaire du disjoncteur 16, du jeu de barres 18, du dispositif de protection 60, d'une unité de contrôle-commande 30, puis du module de raccordement 86 associé à cette unité de contrôle-commande.

Un deuxième module fonctionnel, noté 90, est représenté à la figure 7. Ce module fonctionnel 90 appartient également à la colonne de raccordement 10C. Il est disposé dans la zone fonctionnelle 26 située en bas de la colonne de raccordement 10C, sous les deux autres zones fonctionnels de la colonne de raccordement.

Le module fonctionnel 90 diffère du module fonctionnel 28 décrit ci-dessus en ce qu'il comprend deux unités de contrôle-commande 30, au lieu de quatre unités de contrôle-commande. Parmi ces deux unités, on distingue une unité de contrôle-commande 30B de hauteur 2U, et une unité de contrôle-commande 30C de hauteur H30C égale à 4U.

En conséquence, le module fonctionnel 90 comprend deux modules d'entrée-sortie 82, associés chacun à l'une des deux unités de contrôle-commande, et deux modules de raccordement 86, associés chacun à l'une des deux unités de contrôle-commande.

Le dispositif de protection 60, la structure de support 70, le tronçon de bus informatique 80, les modules d'entrée-sortie 82 et les modules de raccordement 86 du module fonctionnel 90 fonctionnent de la même manière que les mêmes éléments du module fonctionnel 28.

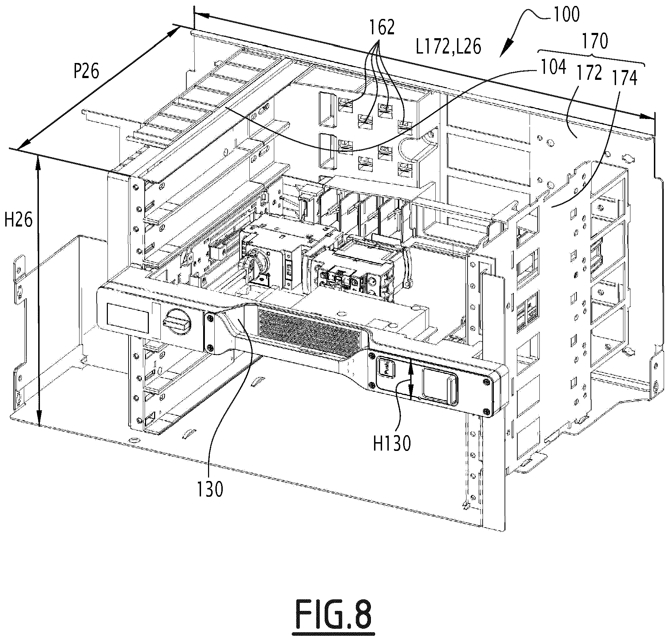

Un autre module fonctionnel, noté 100, est représenté partiellement à la figure 8. Ce module fonctionnel 100 appartient également à la colonne de raccordement 10C. Il est, dans l'exemple, disposé entre les modules fonctionnels 28 et 90, c'est-à-dire dans la zone fonctionnelle intermédiaire de la colonne .

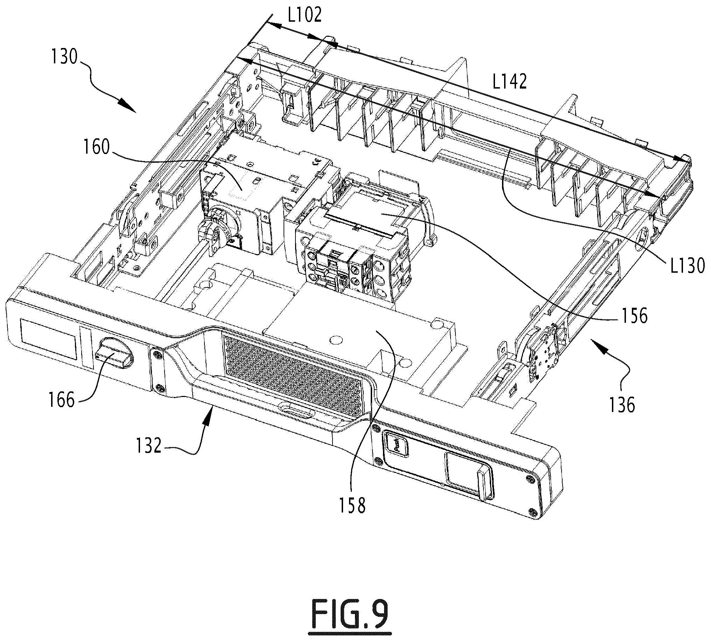

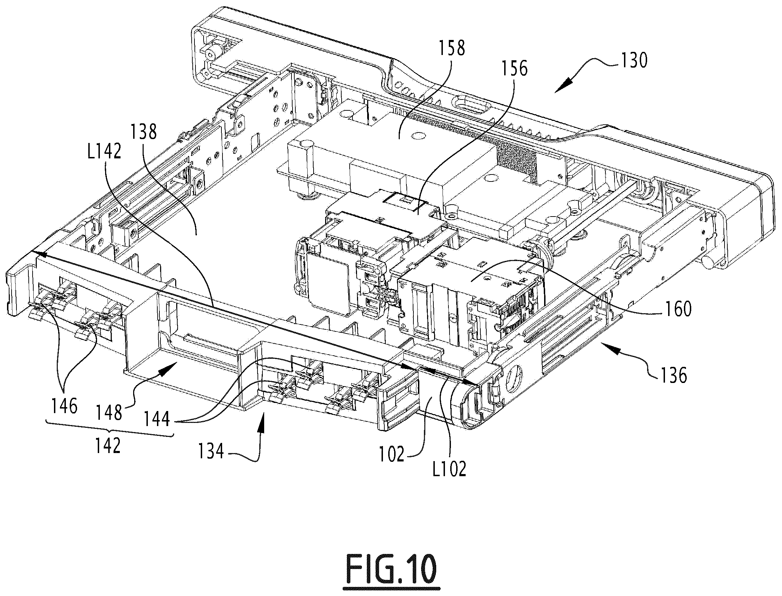

Le module fonctionnel 100 comprend plusieurs unités de contrôle-commande 130, dont une seule est représentée sur la figure 8. Cette unité est également représentée seule aux figures 9 et 10.

Comme les unités de contrôle-commande 30, l'unité de contrôle-commande 130 est ici un tiroir de contrôle-commande, qui est mobile dans le module fonctionnel 100 entre une position de fonctionnement, une position de test et une position déconnectée. À la figure 8, l'unité de contrôle-commande 10 est représentée en position de fonctionnement.

L'unité de contrôle-commande 130 a la même fonction que les unités de contrôle-commande 30 des modules fonctionnels 28 et 90, à savoir permettent le raccordement électrique d'une charge électrique 14 à l'armoire électrique 10, ainsi le contrôle et/ou la surveillance de cette charge électrique.

Ainsi, l'unité de contrôle-commande 130 comprend une partie frontale 132, une partie arrière 134, des parois latérales 136, un fond 138 et un capot non-représenté, de manière analogue aux unités de contrôle-commande 30.

En pratique, les parois latérales 136 sont identiques aux parois latérales 36 des unités de contrôle-commande 30. Notamment, l'unité de contrôle-commande 130 comprend un contact latéral mobile, un détecteur de position et un système de verrouillage, non-représentés sur les figures, identiques à ceux des unités de contrôle-commande 30.

L'unité de contrôle-commande 130 comprend également un interrupteur commandé 156 et un dispositif électronique d'analyse 158, qui fonctionnent comme l'interrupteur commandé 56 et le dispositif électronique d'analyse 58.

Dans l'exemple, la hauteur H130 de chaque unité de contrôle-commande 130 est égale à 1U, c'est-à-dire égale à la hauteur H30A des unités de contrôle-commande 30A. En pratique, la hauteur des unités de contrôle-commande 130 est adaptée aux dimensions de l'interrupteur commandé 156 et peut occuper une hauteur de 1U, 2U, 3U, 4U, 5U ou 6U.

Pour assurer la protection électrique de l'unité de contrôle-commande 130, notamment en cas de défaillance de la charge électrique 14 qui y est raccordée, comme par exemple un court-circuit, l'unité de contrôle-commande 130 embarque également un dispositif de protection 160.

Le dispositif de protection 160 est interne à, c'est-à-dire intégré dans, l'unité de contrôle-commande 130. Les unité de de contrôle-commande 130 sont identiques. Ainsi, au sein du module fonctionnel 100, toutes les unités de contrôle-commande 130 embarquent un dispositif de protection 160. En d'autres termes, à l'inverse du dispositif de protection 60 qui protège de manière mutualisée toutes les unités de contrôle-commande 30 d'un module fonctionnel 28 ou 90, dans le module fonctionnel 100, chaque unité de contrôle-commande 130 dispose de sa propre protection électrique dédiée, sous la forme d'un dispositif de protection 160. Ainsi, chaque unité de contrôle-commande 130 du module fonctionnel 100 est indépendante.

Le dispositif de protection 160 est prévu pour basculer entre un état ouvert, dans lequel l'interrupteur commandé 156 n'est pas alimenté en énergie électrique, et un état fermé, dans lequel l'interrupteur commandé est alimenté en énergie électrique. Ainsi, le dispositif de protection 160 est connecté à l'entrée de l'interrupteur commandé 156.

Le dispositif de protection 160 est de type magnétique, c'est-à-dire que le dispositif de protection 160 est un dispositif de protection magnétique comprenant des pièces mécaniques configurées pour couper l'alimentation de l'interrupteur commandé 156 de l'unité de contrôle-commande 130 en cas de court-circuit se produisant au niveau de la charge électrique raccordée à l'unité de contrôle-commande. Ces pièces mécaniques sont, par exemple, un dispositif de coupure électromécanique, tel qu'un relais électromécanique comprenant un électro-aimant muni d'une partie mobile liée mécaniquement avec un interrupteur permettant de couper l'alimentation de l'interrupteur commandé 156. En pratique, la coupure du courant par un dispositif de protection de type magnétique s'effectue dans un temps supérieur à 5 ms après détection du court-circuit, c'est-à-dire que le temps de coupure d'un dispositif de protection de type magnétique est, au mieux, dix fois plus long que le temps de coupure d'un dispositif de protection de type hybride.

On comprend alors que le module fonctionnel 100 ne comporte pas de dispositif de protection distinct des unités de contrôle-commande 130.

Pour accommoder la présence du dispositif de protection 160, une largeur principale de l'unité de contrôle-commande 130, notée L130 et mesurée selon l'axe X entre les deux parois latérales 136, est strictement supérieure à la largeur principale L30 des unités de contrôle-commande 30. En effet, puisque l'unité de contrôle-commande 130 comprend les mêmes éléments que les unités de contrôle-commande 30, et intègre en outre le dispositif de protection 160, ses dimensions doivent être supérieures afin qu'une place suffisante pour l'installation du dispositif de protection 160 soit disponible à l'intérieur de l'unité de contrôle-commande 130. Ainsi, la partie frontale 132 est plus longue que la partie frontale 32 et la partie arrière 134 est également plus longue que la partie arrière 34. En pratique, les parties frontale 132 et arrière 134 peuvent être allongées, en comparaison avec les parties frontale 32 et arrière 34, car l'espace occupé par le dispositif de protection 60 dans les modules fonctionnels 28 et 90 est libéré dans le module fonctionnel 100, et donc disponible pour les unités de contrôle-commande 130, le dispositif de protection 160 étant intégré dans l'unité de contrôle-commande 130.

En pratique, l'unité de contrôle-commande 130 comprend, au niveau de sa partie arrière 134 une base arrière 142, qui est identique à la base arrière 42 des unités de contrôle-commande 30. Ainsi, la base arrière 142 porte des connecteurs électriques d'entrée 144, des connecteurs électrique de sortie 146 et, de préférence, un orifice de ventilation 148, qui fonctionnent comme les connecteurs électriques 44 et 46 et l'orifice de ventilation 48.

Dans l'unité de contrôle-commande 130, les connecteurs électriques d'entrée 144 sont connectés à l'entrée dispositif de protection 160 et les connecteurs électriques de sortie 146 sont connectés à la sortie de l'interrupteur commandé 156.

Avantageusement, l'unité de contrôle-commande 130 comprend également, au niveau de sa partie arrière 134, une pièce d'élargissement 102, qui est disposée sur un côté de la base arrière 134, selon l'axe longitudinal X. La pièce d'élargissement 102 est prévue pour que la somme d'une largeur L102 de cette pièce et d'une largeur L142 de la base arrière soit égale à la largeur L130 de l'unité de contrôle-commande.

En variante non-représentée de l'invention, l'unité de contrôle-commande 130 ne comprend pas de pièce d'élargissement 102 et la base arrière 142 n'est pas identique à la base arrière 42, sa largeur L142 étant augmentée par rapport à celle de la base arrière 42, de sorte à être égale à la largeur L130.

Au niveau de sa partie frontale 132, l'unité de contrôle-commande 130 comprend également un interrupteur mécanique 166, prévu pour être actionné par un utilisateur, et permettant de basculer le dispositif de protection 160 entre ses états ouvert et fermé.

Le module fonctionnel 100 comprend en outre une structure de support 170. Cette structure de support comprend un fond 172 et une première paroi latérale 174, qui sont identiques au fond 72 et à la paroi latérale 74 de la structure de support 70, et comprend en outre une seconde paroi latérale 104, qui s'étend parallèlement à la première paroi latérale 174. Notamment, une largeur L172 du fond 172 est égale à la largeur L72 du fond 72.

Le module fonctionnel 100 comprend également des premiers rails et des seconds rails, de préférence six premiers rails et six seconds rails, qui s'étendent selon l'axe transversal Y et qui ne sont pas représentés à la figure 8. Les premiers rails sont similaires aux rails 76A du module fonctionnel 28 et les seconds rails sont similaires aux rails 76B du module fonctionnel 28. Les premiers rails sont disposés sur la seconde paroi latérale 104 de la structure de support 170 et les seconds rails sont disposés sur la première paroi latérale 174 de la structure de support 170, de sorte qu'un second rail soit disposé en regard de chaque premier rail. Les premiers et seconds rails forment ainsi des paires de rails, dans l'exemple six paires de rails, et permettent le montage et le déplacement de l'unité de contrôle-commande 130 dans le module fonctionnel 100.

On comprend ainsi que, en comparaison avec les modules fonctionnels 28 et 90, le module fonctionnel 100 est adapté pour compenser l'absence du dispositif de protection 60, les unités de contrôle-commande 130 étant élargies et la structure de support 170 étant complétée avec la seconde paroi latérale 104 de sorte à pouvoir y disposer les premiers rails.

En outre, la structure de support 170 porte des connecteurs électriques 162, qui sont prévus pour être raccordés aux connecteurs électriques d'entrée 144 de l'unité de contrôle-commande 130. En pratique, la structure de support 170 porte plusieurs groupes de connecteurs électriques 162, dans l'exemple six groupes, de sorte que chaque groupe permet le raccordement aux connecteurs électrique d'entrée d'une unité de contrôle-commande. Les connecteurs électriques 162 sont en outre raccordés au jeu de barres 18 de l'armoire électrique 10, par des moyens non-représentés, comme par exemple par des câbles électriques, des barres conductrices ou des connecteurs adaptés.

Ainsi, le dispositif de protection 160 est alimenté en énergie électrique par le jeu de barres 18 par l'intermédiaire des connecteurs électriques 162.

Le module fonctionnel 100 comprend également un tronçon de bus informatique et autant de modules d'entrée-sortie et de modules de raccordement que d'unités de contrôle-commande 130, qui ne sont pas représentés à la figure 8 et qui sont identiques au tronçon de bus informatique 80, aux modules d'entrée-sortie 82 et aux modules de raccordement 86 des modules fonctionnels 28 et 90.

Ainsi, entre un module fonctionnel 100, d'une part, et un module fonctionnel 28 ou 90, d'autre part, seules la présence ou l'absence d'un dispositif de protection 60, les unités de contrôle-commande et une partie de la structure de support du module fonctionnel diffèrent.

En pratique, les dimensions du module fonctionnel 100 sont similaires aux dimensions des modules fonctionnels 28 et 90, de sorte que chaque module peut être mis en place dans toutes les zones fonctionnelles 26 des colonnes de raccordement 10B et 10C, puisque toutes les zones fonctionnelles ont les mêmes dimensions. En d'autres termes, la hauteur du module fonctionnel 100 est égale à H26 et la profondeur du module fonctionnel 100 est égale à P26.

Il est donc possible de choisir, au sein de l'armoire électrique 10, combien de modules fonctionnels comprennent un dispositif de protection 60 mutualisé pour toutes les unités de contrôle-commande 30 de ces modules fonctionnels, et combien de modules fonctionnels comprennent des unités de contrôle-commande 130 embarquant chacune leur propre dispositif de protection 160.

Dans l'exemple représenté, une colonne de raccordement 10B, 10C comporte jusqu'à cinq zones fonctionnelles 26, donc jusqu'à cinq modules fonctionnels pouvant chacun accueillir entre une et six unités de contrôle-commande 30 ou 130, c'est-à-dire qu'une colonne de raccordement comporte jusqu'à trente unités de contrôle-commande 30 ou 130, et permet donc le raccordement au maximum de trente charges électriques 14. Une colonne de raccordement 10B, 10C est modulable, c'est-à-dire qu'il est possible d'y installer autant de modules fonctionnels et d'unités de contrôle-commande que souhaité.

En variante, une colonne de raccordement 10B, 10C peut comporter plus de cinq zones fonctionnelles et cinq modules fonctionnels, par exemple si la hauteur d'une zone fonctionnelle et d'un module fonctionnel est diminuée ou si la hauteur de la colonne de raccordement est augmentée.

Dans le cas des modules fonctionnels 28 et 90, les unités de contrôle-commande 30 ne comprennent pas de fonctions de protection magnétique et de disjonction, qui sont assurées par le dispositif de protection 60. Ces unités de contrôle-commande 30 n'embarquent alors qu'un élément de contrôle de la charge électrique 14, à savoir l'interrupteur commandé 56, et de l'électronique d'analyse, à savoir la carte électronique 58. Les unités de contrôle-commande 30 sont ainsi également dénommées « unités électroniques ».

Dans le cas du module fonctionnel 100, les unités de contrôle-commande 130 embarquent en outre les fonctions de protection magnétique et de disjonction, assurées par le dispositif de protection embarqué 160, et sont ainsi également dénommées « unités électromécaniques », car le dispositif de protection 160 a un fonctionnement mécanique.

Il est avantageux de pouvoir disposer dans une même armoire électrique 10 d'unités électroniques et d'unités électromécaniques, car des deux types d'unités ne présentent pas les mêmes avantages et inconvénients.

En particulier, les unités électroniques, combinées avec les dispositifs de protection de type hybride, présentent l'avantages d'être particulièrement performantes pour fiabiliser le fonctionnement des charges électriques qui y sont raccordées. En effet, le temps de coupure très réduit des dispositifs de protection de type hybride supprime les risques de dégradation des unités électroniques, et notamment de leurs interrupteurs commandés, et des charges électriques. Cependant, les dispositifs de protection de type hybride sont généralement onéreux. Ainsi, les unités électroniques, combinées avec les dispositifs de protection de type hybride sont préférentiellement utilisées pour alimenter et protéger des charges électriques elles-mêmes onéreuses, ou dont le bon fonctionnement est critique, afin de réduire les risques de panne de la charge électrique. En outre, il est particulièrement intéressant de mutualiser la protection d'un dispositif de protection de type hybride à plusieurs unités de contrôle-commande, dans l'exemple jusqu'à six unités, de manière à réduire le coût de protection par unité.

À l'inverse, les unités électromécaniques présentent l'avantage d'être peu onéreuses à fabriquer, mais le temps de coupure des dispositifs de protection 160 de type magnétique implique que ces dispositifs de protection assurent une moins bonne protection que les dispositifs de protection de type hybride. Ainsi, les unités électromécaniques sont préférentiellement utilisées pour alimenter et protéger des charges électriques peu onéreuses ou dont le bon fonctionnement est peu critique.

Grâce à la modularité de l'armoire électrique 10, il est alors simple d'adapter le nombre d'unités électromécaniques et le nombre d'unités électroniques installées dans les zones fonctionnelles 26 en fonction du besoin précis de l'installation électrique dans laquelle l'armoire électrique est intégrée, notamment du nombre et du type des charges électriques 14.

En outre, les modules fonctionnels 28, 90, d'une part, et le module fonctionnel 100, d'autre part, utilisent en commun un grand nombre de pièces identiques, à savoir le fond et la première paroi latérale de la structure de support, le tronçon de bus informatique et les modules d'entrée-sortie et de raccordement. Cette utilisation commune de pièces identiques est particulièrement avantageuse pour diminuer le coût de fabrication des modules fonctionnels, et donc de l'armoire électrique 10.

De même, les unités de contrôle-commande 30 et les unités de contrôle-commande 130 utilisent également un grand nombre de pièces identiques, à savoir leur base arrière, leurs parois latérales, les différents systèmes portés par leurs parois latérales, tels que le contact latéral mobile, le détecteur de position et le système de verrouillage, et, de préférence, leur carte électronique et leur interrupteur commandé. Cette utilisation de pièces identiques est particulièrement avantageuse pour diminuer le coût de fabrication des unités de contrôle-commande, et donc de l'armoire électrique 10.

En variante non-représentée de l'invention, les modules fonctionnels 28, 90 et/ou 100 ne comprennent pas de module de raccordement. Dans une telle variante, le raccordement des charges électrique 14 aux unités de contrôle-commande 30, 130 s'effectue directement au niveau des unités de contrôle-commande, par exemple à l'aide de câbles électriques.

En variante non-représentée de l'invention, les modules fonctionnels 28, 90 et/ou 100 ne comprennent pas de module d'entrée-sortie ni de tronçon de bus informatique. Dans une telle variante, la connexion entre, d'une part, les unités de contrôle-commande 30, 130, et, d'autre parte, le module de communication 22 et les charges électriques 14, pour l'échange de données et/ou la fourniture de la tension électrique auxiliaire, s'effectue directement à l'aide de câbles électriques, au niveau des unités de contrôle-commande.

En variante non-représentée de l'invention, les modules fonctionnels 28, 90 et/ou 100 ne comprennent pas de structure de support 70, 170, et les autres éléments des modules fonctionnels, tels que par exemple les rails, les dispositifs de protection de type hybride, le tronçon de bus informatique et les modules d'entrée-sortie et de raccordement, sont alors directement fixés sur une ossature de l'armoire électrique 10.

En variante non-représentée de l'invention, l'armoire électrique 10 ne comprend pas de modules fonctionnels, et les unités électroniques associées aux dispositifs de protection de type hybride ou les unités électromécaniques sont directement montées dans les zones fonctionnelles 26, chaque zone fonctionnelle recevant soit des unités électroniques, soit des unités électromécaniques.

Toute caractéristique décrite pour un mode de réalisation ou une variante dans ce qui précède peut être mise en oeuvre pour les autres modes de réalisation et variantes décrits précédemment, pour autant que techniquement faisable.

## Revendications

1. Armoire électrique de raccordement (10), l'armoire électrique étant configurée pour alimenter et contrôler au moins deux charges électriques (14), **caractérisée en ce que** :
- l'armoire électrique (10) comprend plusieurs unités de contrôle-commande (30, 130), choisies parmi :
∘ des unités électromécaniques (130), chaque unité électromécanique étant configurée pour alimenter et contrôler une charge électrique (14) et comprenant un dispositif électronique d'analyse (158), un interrupteur commandé (156) configuré pour permettre ou interrompre l'alimentation de la charge électrique, et un dispositif de protection de type magnétique (160) configuré pour protéger l'unité électromécanique et la charge électrique contre des défauts électriques, et
∘ des unités électroniques (30), chaque unité électronique étant configurée pour alimenter et contrôler une charge électrique (14), comprenant un dispositif électronique d'analyse (58) et un interrupteur commandé (56) configuré pour permettre ou interrompre l'alimentation de la charge électrique et étant dépourvue de dispositif de protection de type magnétique,
- l'armoire électrique (10) comprend au moins deux zones fonctionnelles (26), parmi lesquelles :
∘ une première zone fonctionnelle accueille au moins une unité électromécanique (130), et
∘ une deuxième zone fonctionnelle accueille au moins deux unités électroniques (30) et un dispositif de protection commun (60) configuré pour protéger toutes les unités électroniques (30) de la deuxième zone fonctionnelle et les charges électriques qui y sont raccordées contre des défauts électriques, le dispositif de protection commun étant distinct des unités électroniques,
- la première zone fonctionnelle est en outre adaptée pour recevoir au moins deux unités électroniques et un dispositif de protection commun, et
- la deuxième zone fonctionnelle est en outre adaptée pour recevoir au moins une unité électromécanique.

2. Armoire électrique de raccordement (10) selon la revendication 1, dans laquelle une largeur (L130) de chaque unité électromécanique (130) est strictement supérieure à une largeur (L30) de chaque unité électronique (30), les largeurs (L130, L30) étant mesurées entre deux parois latérales (36, 136) des unités de contrôle-commande (30, 130), et dans laquelle, dans la deuxième zone fonctionnelle, le dispositif de protection commun (60) s'étend sur toute la hauteur (H26) de la deuxième zone fonctionnelle et est disposé sur un côté des unités électroniques (30), selon un axe longitudinal (X) de l'armoire électrique (10).

3. Armoire électrique de raccordement (10) selon la revendication 2, dans laquelle :
- chaque unité de contrôle-commande (30, 130) comprend une base arrière (42, 142), qui porte des connecteurs électriques d'entrée (44, 144), configurés pour alimenter en énergie électrique l'unité de contrôle-commande lorsque l'unité de contrôle-commande est montée dans l'armoire électrique (10), et des connecteurs électriques de sortie (46, 146), configurés pour alimenter en énergie électrique la charge électrique (14) raccordée à l'unité de contrôle-commande lorsque l'unité de contrôle-commande est montée dans l'armoire électrique,
- la base arrière (142) des unités électromécaniques (130) est identique à la base arrière (42) des unités électroniques (30),
- une largeur (L42, L142) de la base arrière (42, 142) est identique à la largeur (L30) des unités électroniques (30), et
- de préférence, chaque unité électromécanique (130) comprend en outre une pièce d'élargissement (102), disposée sur un côté de la base arrière (142) de l'unité électromécanique, de sorte que la somme de la largeur (L142) de la base arrière et d'une largeur (L102) de la pièce d'élargissement est égale à la largeur (L130) des unités électromécaniques (130).

4. Armoire électrique de raccordement (10) selon l'une quelconque des revendications 1 à 3, dans laquelle chaque unité de contrôle-commande (30, 130) est un tiroir de contrôle-commande, mobiles dans la première ou la deuxième zone fonctionnelle (26) entre trois positions principales :
- une position de fonctionnement du tiroir de contrôle-commande, dans laquelle le tiroir de contrôle-commande est configuré pour être raccordé à la charge électrique (14) et dans laquelle le tiroir de contrôle-commande est connecté à un module de communication (22) de l'armoire électrique (10),
- une position de test du tiroir de contrôle-commande, dans laquelle le tiroir de contrôle-commande est configuré pour ne pas être raccordé à la charge électrique et dans laquelle le tiroir de contrôle-commande est connecté au module de communication, et
- une position déconnectée du tiroir de contrôle-commande, dans laquelle le tiroir de contrôle-commande est configuré pour ne pas être raccordé à la charge électrique et dans laquelle le tiroir de contrôle-commande n'est pas connecté au module de communication.

5. Armoire électrique de raccordement (10) selon la revendication 4, dans laquelle chaque tiroir de contrôle-commande (30, 130) comprend une paroi latérale (36) portant un contact latéral mobile (50) configuré pour permettre l'échange de données entre le tiroir de contrôle-commande et le module de communication (22), le contact latéral mobile étant fixe par rapport au module de communication lorsque le tiroir de contrôle-commande est déplacé entre sa position de fonctionnement et sa position de test, et dans laquelle la paroi latérale et le contact latéral mobile des unités électromécaniques (130), d'une part, et des unités électroniques (30), d'autre part, sont identiques.

6. Armoire électrique de raccordement (10) selon l'une quelconque des revendications 4 et 5, dans laquelle chaque tiroir de contrôle-commande (30, 130) comprend un détecteur de position (52), configuré pour détecter si le tiroir de contrôle-commande est en position de fonctionnement, en position de test ou en position déconnectée, et un système de verrouillage (54), configuré pour verrouiller le tiroir de contrôle-commande en position de fonctionnement ou en position de test, et dans laquelle le détecteur de position et le mécanisme de verrouillage des unités électromécaniques (130), d'une part, et des unités électroniques (30), d'autre part, sont identiques.

7. Armoire électrique de raccordement (10) selon l'une quelconque des revendications 1 à 6, dans laquelle le dispositif de protection de type magnétique (160) de chaque unité électromécanique (130) comprend un relais électromécanique, configuré pour couper l'alimentation de l'interrupteur commandé (156) de l'unité électromécanique en cas de court-circuit se produisant au niveau de la charge électrique (14) raccordée à l'unité électromécanique, cette coupure s'effectuant dans un temps supérieur à 5 ms.

8. Armoire électrique de raccordement (10) selon l'une quelconque des revendications 1 à 7, dans laquelle le dispositif de protection commun (60) de la deuxième zone fonctionnelle (26) est de type hybride et comprend :
- un semi-conducteur, configuré pour détecter un court-circuit se produisant au niveau d'une charge électrique (14) raccordée à l'une des unités électroniques (30) de la deuxième zone fonctionnelle, ou au niveau de l'une des unités électroniques, et
- un élément de protection électromécanique, configuré pour couper l'alimentation des unités électroniques de la deuxième zone fonctionnelle, cette coupure s'effectuant dans un temps inférieur à 500 µs après détection du court-circuit.

9. Armoire électrique de raccordement (10) selon l'une quelconque des revendications 1 à 8, dans laquelle une partie frontale (132) de chaque unité électromécanique (130) présente un interrupteur mécanique (166) contrôlant le basculement entre un état ouvert et un état fermé du dispositif de protection de type magnétique (160) de l'unité électromécanique, configuré pour être actionné par un utilisateur, et dans laquelle une face avant (68) du dispositif de protection commun (60) présente un interrupteur mécanique (66) contrôlant le basculement entre un état ouvert et un état fermé du dispositif de protection commun, configuré pour être actionné par un utilisateur.

10. Armoire électrique de raccordement (10) selon l'une quelconque des revendications 1 à 9, dans laquelle l'armoire électrique (10) comprend au moins deux modules fonctionnels (28, 90, 100), chaque module fonctionnel comprenant :
- soit au moins une unité électromécanique (130), soit au moins deux unités électroniques (30),
- si le module fonctionnel comprend des unités électroniques (30), un dispositif de protection commun (60),
- un tronçon de bus informatique (80), connecté à toutes les unités de contrôle-commande du module fonctionnel,
- autant de modules de raccordement (86) que d'unités de contrôle-commande, chaque module de raccordement étant configuré pour raccorder une charge électrique (14) à une unité de contrôle-commande,
- autant de modules d'entrées-sorties (82) que d'unités de contrôle-commande, chaque module d'entrée-sortie étant configuré pour relier le tronçon de bus informatique à une unité de contrôle-commande et à la charge électrique raccordée à cette unité de contrôle-commande et pour permettre l'échange de données de fonctionnement entre ladite charge électrique, d'une part, et ladite unité de contrôle-commande et le tronçon de bus informatique, d'autre part, et
- une structure de support (70, 170), sur laquelle chaque unité de contrôle-commande, le tronçon de bus informatique, chaque module de raccordement, chaque module d'entrée sortie et le cas échéant le dispositif de protection commun sont fixés,
dans laquelle chaque zone fonctionnelle (26) accueille un module fonctionnel,
dans laquelle les tronçons de bus informatique de tous les modules fonctionnel sont connectés entre eux et à un module de communication (22) de l'armoire électrique (10), et dans laquelle le tronçon de bus informatique, les modules de raccordement et les modules d'entrées-sorties des modules fonctionnel (100) comprenant une ou plusieurs unités électromécaniques (130), d'une part, et des modules fonctionnel (28, 90) comprenant une ou plusieurs unités électroniques (30), d'autre part, sont identiques.

## Patentansprüche

1. Verteilerschaltschrank (10), wobei der Schaltschrank konfiguriert ist, um mindestens zwei elektrische Lasten (14) mit Strom zu versorgen und zu steuern, **dadurch gekennzeichnet, dass**:
- der Schaltschrank (10) mehrere Steuer- und Regelungseinheiten (30, 130) umfasst, die ausgewählt sind aus:
∘ elektromechanischen Einheiten (130), wobei jede elektromechanische Einheit konfiguriert ist, um eine elektrische Last (14) zu versorgen und zu steuern, und umfassend eine elektronische Analysevorrichtung (158), einen gesteuerten Schalter (156), der konfiguriert ist, um die Versorgung der elektrischen Last zu ermöglichen oder zu unterbrechen, und eine Schutzvorrichtung vom magnetischen Typ (160), die konfiguriert ist, um die elektromechanische Einheit und die elektrische Last vor elektrischen Fehlern zu schützen; und
∘ elektronische Einheiten (30), wobei jede elektronische Einheit konfiguriert ist, um eine elektrische Last (14) mit Strom zu versorgen und zu steuern, umfassend eine elektronische Analysevorrichtung (58) und einen gesteuerten Schalter (56), der konfiguriert ist, um die Versorgung der elektrischen Last zu ermöglichen oder zu unterbrechen, und denen eine Schutzvorrichtung vom magnetischen Typ fehlt,
- wobei der Schaltschrank (10) mindestens zwei Funktionsbereiche (26) umfasst, von denen:
∘ ein erster Funktionsbereich mindestens eine elektromechanische Einheit (130) unterbringt, und
∘ ein zweiter Funktionsbereich mindestens zwei elektronische Einheiten (30) und eine gemeinsame Schutzvorrichtung (60) unterbringt, die konfiguriert ist, um alle elektronischen Einheiten (30) des zweiten Funktionsbereichs und die daran angeschlossenen elektrischen Lasten vor elektrischen Fehlern zu schützen, wobei sich die gemeinsame Schutzvorrichtung von den elektronischen Einheiten unterscheidet,
- der erste Funktionsbereich ferner angepasst ist, um mindestens zwei elektronische Einheiten und eine gemeinsame Schutzvorrichtung aufzunehmen, und
- der zweite Funktionsbereich ferner angepasst ist, um mindestens eine elektromechanische Einheit aufzunehmen.

2. Verteilerschaltschrank (10) nach Anspruch 1, wobei eine Breite (L130) jeder elektromechanischen Einheit (130) strikt größer ist als eine Breite (L30) jeder elektronischen Einheit (30), wobei die Breiten (L130, L30) zwischen zwei Seitenwänden (36, 136) der Steuer- und Regelungseinheiten (30, 130) gemessen werden, und wobei sich die gemeinsame Schutzvorrichtung (60) in dem zweiten Funktionsbereich über die gesamte Höhe (H26) des zweiten Funktionsbereichs erstreckt und auf einer Seite der elektronischen Einheiten (30) entlang einer Längsachse (X) des Schaltschranks (10) angeordnet ist.

3. Verteilerschaltschrank (10) nach Anspruch 2, wobei:
- jede Steuer- und Regelungseinheit (30, 130) eine hintere Basis (42, 142) umfasst, die elektrische Eingangsverbinder (44, 144) trägt, die konfiguriert sind, um die Steuer- und Regelungseinheit mit elektrischer Energie zu versorgen, wenn die Steuer- und Regelungseinheit in dem Schaltschrank (10) montiert ist, und elektrische Ausgangsverbinder (46, 146), die konfiguriert sind, um die elektrische Last (14), die mit der Steuereinheit verbunden ist, mit elektrischer Energie zu versorgen, wenn die Steuer- und Regelungseinheit in dem Schaltschrank montiert ist,
- die hintere Basis (142) der elektromechanischen Einheiten (130) mit der hinteren Basis (42) der elektronischen Einheiten (30) identisch ist,
- eine Breite (L42, L142) der hinteren Basis (42, 142) mit der Breite (L30) der elektronischen Einheiten (30) identisch ist, und
- vorzugsweise jede elektromechanische Einheit (130) ferner ein Verbreiterungsstück (102) umfasst, das auf einer Seite der hinteren Basis (142) der elektromechanischen Einheit angeordnet ist, sodass die Summe der Breite (L142) der hinteren Basis und einer Breite (L102) des Verbreiterungsstücks gleich wie die Breite (L130) der elektromechanischen Einheiten (130) ist.

4. Verteilerschaltschrank (10) nach einem der Ansprüche 1 bis 3, wobei jede Steuer- und Regelungseinheit (30, 130) ein Steuer- und Regelungseinschub ist, der in dem ersten oder zweiten Funktionsbereich (26) zwischen drei Hauptpositionen bewegbar ist:
- einer Betriebsposition des Steuer- und Regelungseinschubs, in der der Steuer- und Regelungseinschub konfiguriert ist, um mit der elektrischen Last (14) verbunden zu sein, und in der der Steuer- und Regelungseinschub mit einem Kommunikationsmodul (22) des Schaltschranks (10) verbunden ist,
- einer Testposition des Steuer- und Regelungseinschubs, in der der Steuer- und Regelungseinschub konfiguriert ist, um nicht mit der elektrischen Last verbunden zu sein, und in der der Steuer- und Regelungseinschub mit dem Kommunikationsmodul verbunden ist, und
- einer von dem Steuer- und Regelungseinschub getrennten Position, in der der Steuer- und Regelungseinschub konfiguriert ist, um nicht mit der elektrischen Last verbunden zu sein, und in der der Steuer- und Regelungseinschub nicht mit dem Kommunikationsmodul verbunden ist.

5. Verteilerschaltschrank (10) nach Anspruch 4, wobei jeder Steuer- und Regelungseinschub (30, 130) eine Seitenwand (36) umfasst, die einen bewegbaren seitlichen Kontakt (50) trägt, der konfiguriert ist, um den Datenaustausch zwischen dem Steuer- und Regelungseinschub und dem Kommunikationsmodul (22) zu ermöglichen, wobei der bewegbare seitliche Kontakt in Bezug auf das Kommunikationsmodul feststehend ist, wenn die Steuer- und Regelungseinschub zwischen ihrer Betriebsstellung und ihrer Testposition bewegt wird, und wobei die Seitenwand und der bewegbare seitliche Kontakt der elektromechanischen Einheiten (130) einerseits und der elektronischen Einheiten (30) andererseits identisch sind.

6. Verteilerschaltschrank (10) nach einem der Ansprüche 4 oder 5, wobei jeder Steuer- und Regelungseinschub (30, 130) einen Positionsdetektor (52), der konfiguriert ist, um zu erfassen, ob der Steuer- und Regelungseinschub in der Betriebsstellung, in der Testposition oder in der getrennten Stellung ist, und ein Verriegelungssystem (54), das konfiguriert ist, um den Steuer- und Regelungseinschub in der Betriebsposition oder der Testposition zu verriegeln, umfasst, und wobei der Positionsdetektor und der Verriegelungsmechanismus der elektromechanischen Einheiten (130) einerseits und der elektronischen Einheiten (30) andererseits identisch sind.

7. Verteilerschaltschrank (10) nach einem der Ansprüche 1 bis 6, wobei die Schutzvorrichtung vom magnetischen Typ (160) jeder elektromechanischen Einheit (130) ein elektromechanisches Relais umfasst, das konfiguriert ist, um die Stromversorgung des gesteuerten Schalters (156) der elektromechanischen Einheit im Fall eines Kurzschlusses, der an der an die elektromechanische Einheit angeschlossenen elektrischen Last (14) auftritt, zu unterbrechen, wobei diese Unterbrechung in einer Zeit von mehr als 5 ms erfolgt.

8. Verteilerschaltschrank (10) nach einem der Ansprüche 1 bis 7, wobei die gemeinsame Schutzvorrichtung (60) des zweiten Funktionsbereichs (26) von einem hybriden Typ ist und Folgendes umfasst:
- einen Halbleiter, der konfiguriert ist, um einen Kurzschluss zu erfassen, der an einer elektrischen Last (14), die an eine der elektronischen Einheiten (30) des zweiten Funktionsbereichs angeschlossen ist, oder an einer der elektronischen Einheiten auftritt, und
- ein elektromechanisches Schutzelement, das konfiguriert ist, um die Stromversorgung der elektronischen Einheiten des zweiten Funktionsbereichs zu unterbrechen, wobei diese Unterbrechung in einer Zeit von weniger als 500 µs nach Erfassen des Kurzschlusses erfolgt.

9. Verteilerschaltschrank (10) nach einem der Ansprüche 1 bis 8, wobei eine Frontseite (132) jeder elektromechanischen Einheit (130) einen mechanischen Schalter (166) aufweist, der das Umschalten zwischen einem offenen Zustand und einem geschlossenen Zustand der Schutzvorrichtung vom magnetischen Typ (160) der elektromechanischen Einheit steuert, der konfiguriert ist, um von einem Benutzer betätigt zu werden, und wobei eine Vorderseite (68) der gemeinsamen Schutzvorrichtung (60) einen mechanischen Schalter (66) aufweist, der ein Umschalten zwischen einem offenen Zustand und einem geschlossenen Zustand der gemeinsamen Schutzvorrichtung steuert, der konfiguriert ist, um von einem Benutzer betätigt zu werden.

10. Verteilerschaltschrank (10) nach einem der Ansprüche 1 bis 9, wobei der Schaltschrank (10) mindestens zwei Funktionsmodule (28, 90, 100) umfasst, jedes Funktionsmodul umfassend:
- mindestens eine elektromechanische Einheit (130) oder mindestens zwei elektronische Einheiten (30),
- wenn das Funktionsmodul elektronische Einheiten (30) umfasst, eine gemeinsame Schutzvorrichtung (60),
- einen Computerbusabschnitt (80), der mit allen Steuer- und Regelungseinheiten des Funktionsmoduls verbunden ist,
- so viele Anschlussmodule (86) wie Steuer- und Regelungseinheiten, wobei jedes Anschlussmodul konfiguriert ist, um eine elektrische Last (14) an eine Steuer- und Regelungseinheit anzuschließen,
- so viele Ein-/Ausgangsmodule (82) wie Steuer- und Regelungseinheiten, wobei jedes Ein-/Ausgangsmodul konfiguriert ist, um den Computerbusabschnitt mit einer Steuer- und Regelungseinheit und mit der an diese Steuer- und Regelungseinheit angeschlossenen elektrischen Last zu verbinden und um den Austausch von Betriebsdaten zwischen der elektrischen Last einerseits und der Steuer- und Regelungseinheit und dem Computerbusabschnitt andererseits zu ermöglichen, und
- eine Trägerstruktur (70, 170), an der jede Steuer- und Regelungseinheit, der Computerbusabschnitt, jedes Anschlussmodul, jedes Ein-/Ausgangsmodul und optional die gemeinsame Schutzvorrichtung befestigt sind,
wobei jeder Funktionsbereich (26) ein Funktionsmodul unterbringt,
wobei die Computerbusabschnitte aller Funktionsmodule miteinander und mit einem Kommunikationsmodul (22) des Schaltschranks (10) verbunden sind, und wobei der Computerbusabschnitt, die Verbindungsmodule und die Ein-/Ausgangsmodule der Funktionsmodule (100), die eine oder mehrere elektromechanische Einheiten (130) umfassen, einerseits und der Funktionsmodule (28, 90), die eine oder mehrere elektronische Einheiten (30) umfassen, andererseits identisch sind.

## Claims

1. An electrical connection cabinet (10), the electrical cabinet being configured to supply and control at least two electrical loads (14), **characterized in that**:
- the electrical cabinet (10) comprises a plurality of control units (30, 130), selected from among:
∘ electromechanical units (130), each electromechanical unit being configured to supply and control an electrical load (14), and comprising an electronic analysis device (158), a controlled switch (156) configured to allow or interrupt the supply to the electrical load, and a magnetic type protection device (160) configured to protect the electromechanical unit and the electrical load against electrical faults, and
∘ electronic units (30), each electronic unit being configured to supply and control an electrical load (14), and comprising an electronic analysis device (58) a controlled switch (56) configured to allow or interrupt the supply to the electrical load and being devoid of a magnetic type protection device,
- the electrical cabinet (10) comprises at least two functional zones (26), from among which:
∘ a first functional zone accommodates at least one electromechanical unit (130), and
∘ a second functional zone accommodates at least two electronic units (30), and a common protection device (60) configured to protect all the electronic units (30) in the second functional zone and the electrical loads connected to them against electrical faults, the common protection device being separate from the electronic units,
- the first functional zone is, in addition, adapted to accommodate at least two electronic units and a common protection device, and
- the second functional zone is, in addition, adapted to accommodate at least one electromechanical unit.

2. The electrical connection cabinet (10) according to claim 1, wherein a width (L130) of each electromechanical unit (130) is strictly greater than a width (L30) of each electronic unit (30), the widths (L130, L30) being measured between two lateral walls (36, 136) of the control units (30, 130), and wherein, in the second functional zone, the common protection device (60) extends over the entire height (H26) of the second functional zone and is arranged on one side of the electronic units (30), according to a longitudinal axis (X) of the control cabinet (10).

3. The electrical connection cabinet (10) according to claim 2, wherein:
- each control unit (30, 130) comprises a rear base (42, 142), which carries the electrical input connectors (44, 144), configured to supply electrical power to the control unit when the control unit is mounted in the electrical cabinet (10), and electrical output connectors (46, 146), configured to supply electrical power to the electrical load (14) connected to the control unit when the control unit is mounted in the electrical cabinet,
- the rear base (142) of the electromechanical units (130) is identical to the rear base (42) of the electronic units (30),
- a width (L42, L142) of the rear base (42, 142) is identical to the width (L30) of the electronic units (30), and
- preferably, each electromechanical unit (130) further comprises an enlargement piece (102), arranged on one side of the rear base (142) of the electromechanical unit, so that the sum of the width (L142) of the rear base and a width (L102) of the enlargement piece is equal to the width (L130) of the electromechanical units (130).

4. The electrical connection cabinet (10) according to any one of claims 1 to 3, wherein each control unit (30, 130) is a control drawer, movable in the first or second functional area (26) between three main positions:
- an operating position of the control drawer, wherein the control drawer is configured to be connected to the electrical load (14) and wherein the control drawer is connected to a communication module (22) of the control cabinet (10),
- a test position of the control drawer, wherein the control drawer is configured not to be connected to the electrical load and wherein the control drawer is connected to the communication module, and
- a disconnected position of the control drawer, wherein the control drawer is configured not to be connected to the electrical load and wherein the control drawer is not connected to the communication module.

5. The electrical connection cabinet (10) according to claim 4, wherein each control drawer (30, 130) comprises a lateral wall (36) carrying a movable lateral contact (50) configured to allow data exchange between the control drawer and the communication module (22), the movable lateral contact being fixed relative to the communication module when the control drawer is moved between its operating position and its test position, and wherein the lateral wall and the movable lateral contact of the electromechanical units (130), on the one hand, and of the electronic units (30), on the other hand, are identical.

6. The electrical connection cabinet (10) according to any one of claims 4 and 5, wherein each control drawer (30, 130) comprises a position detector (52), configured to detect whether the control drawer is in the operating position, in the test position or in the disconnected position, and a locking system (54), configured to lock the control drawer in the operating position or in the test position, and wherein the position detector and the locking mechanism of the electromechanical units (130), on the one hand, and the electronic units (30), on the other hand, are identical.

7. The electrical connection cabinet (10) according to any one of claims 1 to 6, wherein the magnetic type protection device (160) of each electromechanical unit (130) comprises an electromechanical relay, configured to cut off the power supply to the controlled switch (156) of the electromechanical unit in case of a short circuit occurring in the electrical load (14) connected to the electromechanical unit, this cutoff taking place in a time greater than 5 ms.

8. The electrical connection cabinet (10) according to any one of claims 1 to 7, wherein the common protection device (60) of the second functional zone (26) is of a hybrid type and comprises:
- a semiconductor, configured to detect a short circuit occurring at an electrical load (14) connected to one of the electronic units (30) of the second functional zone, or at one of the electronic units, and
- an electromechanical protection element, configured to cut off the power supply to the electronic units of the second functional zone, this cutoff taking place in a time of less than 500 µs after detection of the short-circuit.

9. The electrical connection cabinet (10) according to any one of claims 1 to 8, wherein a front part (132) of each electromechanical unit (130) comprises a mechanical switch (166) controlling switching between an open state and a closed state of the magnetic type protection device (160) of the electromechanical unit, configured to be actuated by a user, and wherein a front face (68) of the common protection device (60) comprises a mechanical switch (66) controlling switching between an open state and a closed state of the common protection device, configured to be actuated by a user.

10. The electrical connection cabinet (10) according to any one of claims 1 to 9, wherein the electrical connection cabinet (10) comprises at least two functional modules (28, 90, 100), each functional module comprising:
- either at least one electromechanical unit (130), or at least two electronic units (30),
- if the functional module comprises electronic units (30), a common protection device (60),
- a data bus section (80), connected to all the control units of the functional module,
- as many connection modules (86) as control units, each connection module being configured to connect an electrical load (14) to a control unit,
- as many input/output modules (82) as there are control units, each input/output module being configured to connect the data bus section to a control unit and to the electrical load connected to this control unit, and to allow the exchange of operating data between said electrical load, on the one hand, and said control unit and the data bus section, on the other hand, and
- a support structure (70, 170), to which each control unit, the data bus section, each connection module, each input/output module and, if applicable, the common protection device are fixed,
wherein each functional area (26) accommodates a functional module,
wherein the data bus sections of all the function modules are connected to each other and to a communication module (22) of the electrical cabinet (10), and
wherein the data bus section, the connection modules and the input/output modules of the functional modules (100) comprising one or more electromechanical units (130), on the one hand, and the functional modules (28, 90) comprising one or more electronic units (30), on the other hand, are identical.
